(19) Europäisches Patentamt European Patent Office Office européen des brevets

(11) **EP 3 223 550 A1**

(12) **EUROPEAN PATENT APPLICATION**

(43) Date of publication:
**27.09.2017 Bulletin 2017/39**

(51) Int Cl.:
**H04W 16/18** (2009.01)    **H04W 24/02** (2009.01)

(21) Application number: **17158777.7**

(22) Date of filing: **01.03.2017**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(30) Priority: **25.03.2016 CN 201610178130**<br><br>(71) Applicant: **Fujitsu Limited**<br>**Kanagawa 211-8588 (JP)** | (72) Inventors:<br>• **AO, Chen**<br>**Beijing 100027 (CN)**<br>• **LI, Hongchun**<br>**Beijing 100027 (CN)**<br>• **TIAN, Jun**<br>**Beijing 100027 (CN)**<br><br>(74) Representative: **Hutchison, James**<br>**Haseltine Lake LLP**<br>**300 High Holborn**<br>**London, Greater London WC1V 7JH (GB)** |

(54) **AUXILIARY APPARATUS FOR WIRELESS NETWORK DEPLOYMENT, PORTABLE TERMINAL AND METHOD FOR WIRELESS NETWORK DEPLOYMENT**

(57)    An auxiliary apparatus for wireless network deployment, portable terminal and method for wireless network deployment. The apparatus includes: a transmitting unit configured to broadcast a link detection request; a collecting unit configured to collect link detection responses received within a predetermined time; a first determining unit configured to, taking nodes transmitting the link detection response as reference nodes, determine a target reference node and non-target reference nodes of the apparatus; a second determining unit configured to determine a link connection status of the apparatus relative to each reference node according to the link detection responses; and a third determining unit configured to determine a movement direction and distance of the apparatus according to the link connection status of the apparatus relative to each reference node. Hence, personnel of wireless network deployment are assisted in a practical deployment scenario in precisely deploying nodes in the wireless network.

Fig. 16

**Description**

Field

This disclosure relates to the field of communications technologies, and in particular to an auxiliary apparatus for wireless network deployment, a portable terminal and a method for wireless network deployment.

Background

In recent years, fast development of the wireless multi-hop network technology makes it more convenient for the human society in acquiring information, and the acquired contents become more rich. A typical wireless multi-hop network has multiple forms, such as a wireless sensor network, and a wireless self-organizing network, etc. According to different requirements of the people on information, wireless multi-hop networks are often deployed in different application environments to obtain corresponding data information, such as an urban environment built with steel, and cements, etc., a wild environment with no block, a leafy forest environment, and a boundless grass environment, etc. For different environments, there exist relatively large differences between network performances of the wireless multi-hop networks. Due to invisibility of wireless electromagnetic waves, in deploying network nodes, it is impossible for personnel of wireless network deployment to obtain transmission performances of deployed networks in a current environment in a real-time manner. Furthermore, builders usually do not possess rich wireless communications knowledge in deploying networks, and only deploy the wireless multi-hop networks purely according to their experiences. And problems often appear after completion of network deployment, such as low network connectivity, low transmission performances of the networks, instability and frequent changes of information transmission paths, and that some regional information cannot be transmitted to user end due to stand-alone nodes, etc.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

The present invention is defined by the appended independent claims, to which reference should now be made. Specific embodiments are defined in the dependent claims.

In order to ensure that a stable wireless network transmission system is constructed and improve a network deployment efficiency and accuracy of the personnel of network deployment, embodiments of this disclosure provide an auxiliary apparatus for wireless network deployment, a portable terminal and a method for wireless network deployment, which may be used to assist the personnel of network deployment in learning statuses of deployed networks in deploying wireless networks, and are capable of prompting the personnel of network deployment in a real-time manner to adjust deployment positions of nodes.

According to an embodiment of a first aspect of this disclosure, there is provided an auxiliary apparatus for wireless network deployment, including:

a transmitting unit configured to broadcast a link detection request;
a collecting unit configured to collect link detection responses received within a predetermined time;
a first determining unit configured to, taking nodes transmitting the link detection response as reference nodes, determine a target reference node and non-target reference nodes of the apparatus;
a second determining unit configured to determine a link connection status of the apparatus relative to each reference node according to the link detection responses; and
a third determining unit configured to determine a movement direction and distance of the apparatus according to the link connection status of the apparatus relative to each reference node.

According to an embodiment of a second aspect of this disclosure, there is provided a portable terminal, including an auxiliary apparatus for wireless network deployment, the auxiliary apparatus for wireless network deployment being configured to:

broadcast a link detection request;
collect link detection responses received within a predetermined time;
determine a target reference node and non-target reference nodes of the apparatus taking nodes transmitting the link detection responses as reference nodes;
determine a link connection status of the apparatus relative to each reference node according to the link detection responses;
and determine a movement direction and distance of the apparatus according to the link connection status of the apparatus relative to each reference node.

According to an embodiment of a third aspect of this disclosure, there is provided a method for wireless network deployment, applied to an auxiliary apparatus for wireless network deployment, including:

broadcasting a link detection request;
collecting link detection responses received within a predetermined time;
determining a target reference node and non-target reference nodes of the apparatus taking nodes transmitting the link detection responses as reference nodes;
determining a link connection status of the apparatus relative to each reference node according to the link detection responses; and
determining a movement direction and distance of the apparatus according to the link connection status of the apparatus relative to each reference node.

An advantage of the embodiments of this disclosure exists in that with the embodiments of this disclosure, not only deployment of a stable and high-efficiency wireless network transmission system can be ensured, but also working amounts and complexity of personnel of network deployment may be greatly saved, thereby saving a large amount of network deployment periods.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations and modifications within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of the present disclosure, which constitute a part of the specification and illustrate the preferred embodiments of the present disclosure, and are used for setting forth the principles of the present disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:

FIG. 1 is a schematic diagram of an implementation of an auxiliary apparatus for wireless network deployment;
FIG. 2 is a schematic diagram of an actual deployment scenario;
FIG. 3 is a schematic diagram of basic information exchange in a process of detection of a link connection status;
FIG. 4 is a schematic diagram of a response await extension mechanism in the process of detection of a link connection status;
FIG. 5 is a schematic diagram of a suspend response guarantee mechanism in the process of detection of a link connection status;
FIGs. 6-8 are schematic diagrams of an example of adjusting the auxiliary apparatus to be in a stable connection status with a target reference node and in unconnected statuses with other target reference nodes;
FIG. 9 is a schematic diagram of an implementation of a second determining unit of the auxiliary apparatus shown in FIG. 1;
FIG. 10 is schematic diagram of region division around deployed nodes according to the link connection status;
FIG. 11 is schematic diagram of transfer of the link connection status;
FIG. 12 is a schematic diagram of an implementation of a third determining unit of the auxiliary apparatus shown in FIG. 1;
FIG. 13 is a schematic diagram of another implementation of the third determining unit of the auxiliary apparatus shown in FIG. 1;
FIG. 14 is a schematic diagram of an implementation of the portable terminal of an embodiment;
FIG. 15 is a schematic diagram of a systematic structure of the portable terminal of the embodiment;
FIG. 16 is a flowchart of an implementation of the method for wireless network deployment of an embodiment;
FIG. 17 is a flowchart of an implementation of a method for determining a movement direction and distance of the auxiliary apparatus according to connection statuses of links between the auxiliary apparatus and the reference nodes; and
FIG. 18 is a flowchart of another implementation of the method for wireless network deployment of the embodiment.

Detailed Description

These and further embodiments of aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes and modifications coming within the terms of the appended claims.

In the embodiments of this disclosure, the auxiliary apparatus for wireless network deployment may be configured in a portable terminal, such as being configured in portable mobile wireless signal detection equipment. And the portable terminal may be carried by personnel of network deployment to near any deployed node according to a predetermined network plan and an on-site network deployment environment, so as to accurately evaluate wireless link connection statuses at any positions around it and feed back a result to the personnel of network deployment in a real-time manner.

In the embodiments of this disclosure, the auxiliary apparatus for wireless network deployment includes a wireless communications module used for receiving and transmitting signals, which may transmit request signals for performing link detection to any nodes in the network, and may also receive various response signals fed back by any nodes in the network. Furthermore, the auxiliary apparatus for wireless network deployment may be configured with a prompt module for prompting a connection status of a link between a current to-be-measured position and a deployed node to the personnel of network deployment. After performing statistical operations on received signals, the prompt module may further prompt position adjustment information to the personnel of network deployment. And if a link connection status is not ideal at a measured position, the prompt module may direct the personnel of network deployment to adjust a node deployment position to another region where a better network connection status may be obtained. Details shall be described in the following embodiments.

In the embodiments of this disclosure, the portable terminal configured with the auxiliary apparatus for wireless network deployment may be designed as different equipment modalities having functions of the auxiliary apparatus for wireless network deployment. For example, the portable terminal may be convenient handhold equipment. And for another example, the portable terminal may also be external equipment having input and output ports and operating in conjunction with a computer.

Various implementations of this disclosure shall be described below with reference to the accompanying drawings. These implementations are illustrative only, and are not intended to limit this disclosure.

Embodiment 1

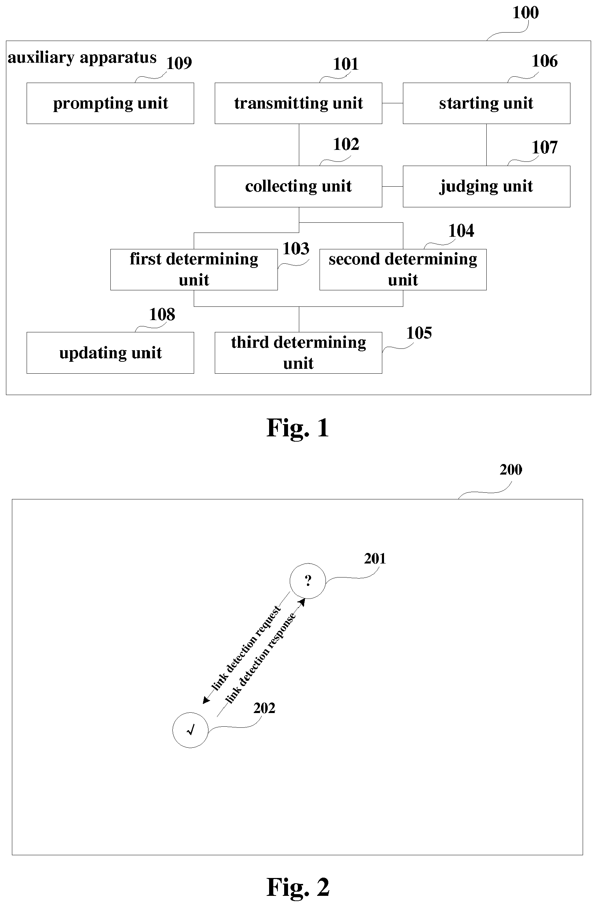

An embodiment of this disclosure provides an auxiliary apparatus for wireless network deployment. FIG. 1 is a schematic diagram of the auxiliary apparatus. As shown in FIG. 1, the auxiliary apparatus 100 includes a transmitting unit 101, a collecting unit 102, a first determining unit 103, a second determining unit 104 and a third determining unit 105.

In this embodiment, the transmitting unit 101 is configured to broadcast a link detection request, and the collecting unit 102 is configured to collect link detection responses received within a predetermined time. The transmitting unit 101 and the collecting unit 102 may be realized by the wireless communications module described above.

In this embodiment, after collecting the link detection responses by the transmitting unit 101 and the collecting unit 102, the first determining unit 103 may determine a target reference node and non-target reference nodes of the auxiliary apparatus 100 by taking nodes transmitting the link detection response as reference nodes of the apparatus 100, the second determining unit 104 may determine a link connection status of the auxiliary apparatus 100 relative to each reference node according to the link detection responses, and the third determining unit 105 determines a movement direction and distance of the auxiliary apparatus 100 according to the link connection status of the auxiliary apparatus 100 relative to each node transmitting the link detection response.

In this embodiment, the nodes transmitting the link detection response are those that have been deployed in the network (briefly referred to as deployed nodes), and indicate that they may be taken as the reference nodes of the apparatus by transmitting the link detection response. The first determining unit 103 may determine the target reference node and non-target reference nodes of the apparatus according to the reference nodes, so that the third determining unit 105 determines whether the apparatus needs to move and to which direction (a movement direction) it moves and an amount (a movement distance) of movement if the apparatus needs to move according to connection statuses of links between the apparatus and the target reference nodes and connection statuses of links between the apparatus and the non-target reference nodes.

In this embodiment, when the third determining unit 105 determines the movement direction and distance of the auxiliary apparatus 100, it should be ensured that the auxiliary apparatus and the target reference node are in a certain connection status, such as a stable connection status, and the auxiliary apparatus and the non-target reference nodes are in another connection status, such as an unconnected status. Hence, assisting personnel of wireless network deployment to deploy nodes in a practical deployment scenario based on a position where the auxiliary apparatus 100 is currently located, thereby achieving precise deployment of the nodes in the wireless network by the auxiliary apparatus 100.

In this embodiment, as shown in FIG. 1, the auxiliary apparatus 100 may further include a starting unit 106, which is configured to start a back-off timer after the transmitting unit 101 broadcasts the link detection request, so as to wait for the link detection responses replied by the deployed nodes. In this embodiment, a response await length may be set to be a first predetermined period of time, such as k seconds, so that the collecting unit 102 collects the link detection responses received within the first predetermined period of time.

In this embodiment, as shown in FIG. 1, the auxiliary apparatus 100 may further include a judging unit 107, which is configured to judge whether the above response await length exceeds a predetermined maximum await length, terminate the processing if it is judged yes, and notify the collecting unit 102 to perform subsequent processing if it is judged no.

[0027] In an implementation of this embodiment, as shown in FIG. 1, after the collecting unit 102 collects the link detection responses within the response await length, the transmitting unit 101 may further transmit suspend response requests to the deployed nodes transmitting the link detection responses to notify the deployed nodes to suspend transmitting the link detection responses. And the collecting unit 102 may further receive acknowledgement information fed back by the deployed nodes. In this embodiment, when the collecting unit 102 does not receive the acknowledgement information fed back by the deployed nodes and may still receive the link detection responses transmitted by the deployed nodes, the transmitting unit 101 may again transmit the suspend response requests to the deployed nodes, until the collecting unit 102 receives the acknowledgement information fed back by the deployed nodes.

In this embodiment, when the collecting unit 102 does not receive the link detection responses within the response await length, the transmitting unit 101 may again broadcast the link detection request, and after the transmitting unit 101 again broadcasts the link detection request, the starting unit 106 restarts the back-off timer, modifies the response await length into a second predetermined period of time, such as 2k seconds, and waits for the deployed nodes to respond link detection responses. In order that the link connection detection process of this embodiment is more clear and easy to be understood, it shall be described below with reference to the accompanying drawings.

In the link connection detection process of this embodiment, three packet types, a link detection request packet, a link detection response packet and a suspend response request packet, are defined for the auxiliary apparatus to perform information exchange of link connection detection with other deployed nodes.

The link detection request packet is of a type of broadcast packet. And the auxiliary apparatus may broadcast link detection request packets to surrounding nodes, detect whether there exist deployed nodes, request the deployed nodes to feed back link detection responses, and judge a current link connection status according to received link detection responses. In the link detection request packets, source address information and local identity indicator information may be contained. In this embodiment, the source address information indicates a broadcast source of the link detection request packet, i.e. address information of the auxiliary apparatus. The local identity indicator information indicates a role of a to-be-deployed node currently played by the auxiliary apparatus, that is, it is used to notify the surrounding deployed nodes that a relay node or a sensor node shall be deployed at a deployment position where the auxiliary apparatus is currently located.

The link detection response packet is of a type of a periodically transmitted unicast packet. After receiving the link detection request packet broadcasted by the auxiliary apparatus, the deployed nodes may transmit the link detection response packets to the auxiliary apparatus. The auxiliary apparatus continuously receives the response packets and counts the received link detection response packets, so as to indicate link connection statuses. In the link detection response packet, source address information, destination address information, and information on the number of child nodes, etc., may be contained. In this embodiment, the source address information indicates an address of a source node for making response to the link detection response packet. The destination address information indicates an address of a source node for transmitting a link detection request packet, i.e. the address of the auxiliary apparatus. And the information on the number of child nodes indicates how many nodes become child nodes of the deployed nodes currently.

The suspend response request packet is of a type of unicast packet. When the auxiliary apparatus continuously receives the link detection responses packets until back-off of the response await length terminates, the auxiliary apparatus may transmit a suspend response request packet in a unicast manner to a deployed node feeding back a link detection response packet to it in a unicast manner, notifying the deployed node to suspend feeding back periodically a link detection response packet. Hence, power consumption of the deployed node may be lowered and unnecessary information exchange other than data transmission in the network may be reduced.

FIG. 2 is a schematic diagram of link connection status detection in an actual deployment scenario. As shown in FIG. 2, the personnel of network deployment bring the auxiliary apparatus 201 for wireless network deployment to a node to-be-deployed region 200, and start a process of connection status detection of a link between the auxiliary apparatus 201 and a surrounding deployed node 202.

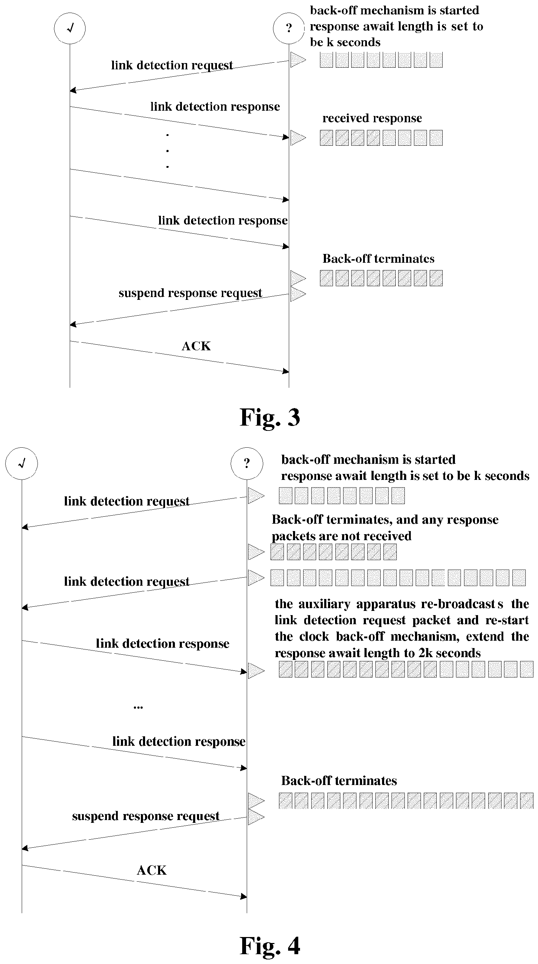

FIG. 3 is a schematic diagram of basic information exchange between the auxiliary apparatus 201 and the deployed node 202 surrounding the to-be-deployed region in the process of connection status detection of the link.

First, the auxiliary apparatus broadcasts link detection request packets to the surrounding nodes, starts a clock back-off mechanism at the same time, waits for the surrounding nodes to feed back link detection response packets, and set a response await length to be k seconds.

If there exists the deployed nodes in a surrounding region that receive the link detection request packets broadcasted by the auxiliary apparatus, and the deployed nodes will periodically feed back link detection response packets in a unicast manner to the auxiliary apparatus.

Within k seconds of the response await length, the auxiliary apparatus continuously receives the link detection response packets fed back by the surrounding deployed nodes in a unicast manner, until the response await length back-off terminates.

In order to lower power consumption of the deployed nodes and unnecessary information exchange other than data transmission in the network, the auxiliary apparatus may further transmit a suspend response request packet in a unicast manner to a deployed node feeding back a link detection response packet to it after the response await length back-off terminates, notifying the deployed node to suspend feeding back periodically a link detection response packet.

In this embodiment, the auxiliary apparatus may count an average received signal strength (an average RSS) and a packet delivery ratio (PDR) of packets received within the response await length according to the link detection response packets continuously received within the response await length. And the auxiliary apparatus may indicate information on connection statuses of links between the position where the auxiliary apparatus is currently located and the deployed nodes (the reference nodes) to the personnel of network deployment according to the statistical results, so that the personnel of network deployment may judge whether the position where the auxiliary apparatus is currently located may be deployed with a new node and the new node may stably access to the deployed network.

In this embodiment, if the auxiliary apparatus does not receive a link detection response packet from any nodes within k seconds of the response await length, the auxiliary apparatus may start a response extension await mechanism.

FIG. 4 is a schematic diagram of the response await extension mechanism. As shown in FIG. 4, in the response await extension mechanism, the auxiliary apparatus may re-broadcast the link detection request packet and re-start the clock back-off mechanism, extend the response await length to 2k seconds, and again wait for a link detection response packet feed back by a deployed node.

In this embodiment, the auxiliary apparatus starts at most $N$ ($N$=1, 2, 3..., which may be preset) times of broadcast of link detection request packets when it does not continuously receive link detection response packets from any nodes, and extend the response await length to $N*k$ seconds.

If the auxiliary apparatus does not continuously receive link detection response packets from any nodes within $N*k$ seconds of the maximum response await length, it may be deemed that a node to-be-deployed position where the auxiliary apparatus is currently located is not a deployable region, and the auxiliary apparatus may prompt such information to the personnel of network deployment, so that the personnel of network deployment may move the auxiliary apparatus to another position for redetection.

If the auxiliary apparatus again receives the link detection response packets from the deployed nodes within $N*k$ seconds of the extended response await length, as described above, the auxiliary apparatus may transmit a suspend response request packet in a unicast manner to the deployed node feeding back a link detection response packet to it, notifying the deployed node to suspend feeding back periodically a link detection response packet.

In this embodiment, the auxiliary apparatus may count average received signal strength of packets received within the extended response await length and a packet delivery ratio according to the link detection response packets continuously received within the extended response await length. And the auxiliary apparatus may indicate information on a connection status of the link between the position where the auxiliary apparatus is currently located and the deployed node to the personnel of network deployment according to the statistical results, and judge whether the position where the auxiliary apparatus is currently located may be deployed with a new node and the new node may stably access to the deployed network.

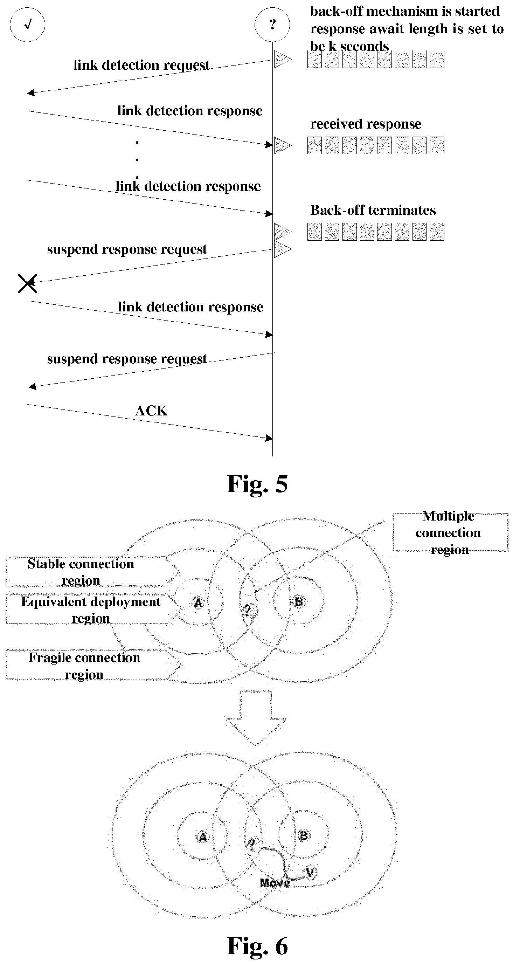

In this embodiment, if the auxiliary apparatus does not receive an acknowledgement (ACK) response packet from a corresponding deployed node after transmitting the suspend response request packet in a unicast manner but may still receive a link detection response packet periodically fed back by the deployed node to the auxiliary apparatus, the auxiliary apparatus may start a suspend response guarantee mechanism, and retransmit the suspend response request packet to the corresponding deployed node, until an ACK response packet is received from the deployed node. FIG. 5 is a schematic diagram of the suspend response guarantee mechanism.

In this embodiment, according to the deployed node transmitting the link detection response (the link detection response received within the predetermined period of time), the first determining unit 103 may determine the target reference node and non-target reference nodes of the auxiliary apparatus for wireless network deployment. After the target reference node and non-target reference nodes are found, the movement direction and distance of the auxiliary apparatus may be determined, so as to make that the connection status of the link between the auxiliary apparatus and the above target reference node is in a certain connection status, and the connection statuses of the links between the auxiliary apparatus and the non-target reference nodes (if any) are in other connection statuses, thereby achieving deployment of the nodes in the wireless network.

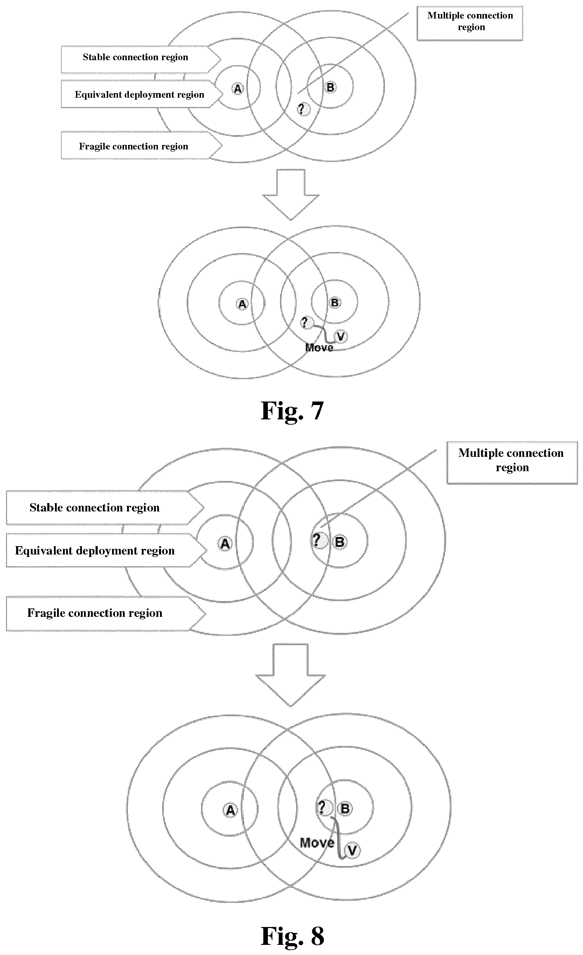

In this embodiment, in order that the to-be-deployed node represented by the auxiliary apparatus can obtain a stable link connection status after being deployed and a connected link is not handed over between multiple nodes, in an implementation, in performing the link connection status detection, the auxiliary apparatus is allowed to find only one reference node capable of maintaining a second status (such as a stable connected status) with the auxiliary apparatus, the reference node being referred to as a target reference node. If there exist multiple reference nodes, the current position of the auxiliary apparatus needs to be adjusted to find one deployment position, such that the auxiliary apparatus and only one reference node, i.e. the target reference node, are in the above second status, and the auxiliary apparatus and rest of the reference nodes, i.e. the non-target reference nodes, are in fourth statuses (such as a non-connected status). FIGs. 6-8 are schematic diagrams of examples of adjusting the auxiliary apparatus to be in a stable connection status with the target reference node and in unconnected statuses with the non-target reference nodes. In this embodiment, a region capable of receiving link detection responses fed back by multiple deployed nodes is referred to as a multi-connection region.

In this embodiment, if there exists only one deployed node transmitting the link detection response to the auxiliary apparatus, that is, the link detection response fed back by one deployed node is only received within the response await length, the deployed node is taken as the target reference node of the auxiliary apparatus, in which case there exists no above non-target reference nodes. Hence, the auxiliary apparatus may calculate a connection status of a link between the auxiliary apparatus and the target reference node, and furthermore, determine the movement direction and distance of the auxiliary apparatus according to the link connection status. Thus the deployment of the nodes is achieved when a connection status of the link between the auxiliary apparatus and the target reference node reaches a certain connection status. The calculation of the above link connection status and the determination of the movement direction and distance shall be described later.

In this embodiment, if there exist multiple deployed nodes transmitting the link detection responses to the auxiliary apparatus, that is, the link detection responses fed back by more than one deployed nodes are received within the response await length, the deployed nodes are taken as the reference nodes of the auxiliary apparatus. At this moment, a deployed node in the above deployed nodes with a minimum payload may be taken as the target reference node of the auxiliary apparatus, and the rest of the deployed nodes are taken as the non-target reference nodes of the auxiliary apparatus. In this embodiment, the minimum payload is, for example, that the number of child nodes is minimum. Hence, the auxiliary apparatus may calculate the connection status of the link between it and the target reference node and the connection statuses of the links between it and the non-target reference nodes, and furthermore, the movement determine movement direction and distance of the auxiliary apparatus. Thus the deployment of the nodes is achieved when a connection status of the link between the auxiliary apparatus and the target reference node reaches a certain connection status and connection statuses of the links between the auxiliary apparatus and the non-target reference nodes reach other connection statuses. The calculation of the above link connection status and the determination of the movement direction and distance shall be described later.

In this embodiment, the second determining unit 104 may determine a link connection status of the auxiliary apparatus relative to each deployed node transmitting the link detection response according to the received link detection responses. The deployed nodes here may include the above-described target reference node, and may also include the non-target reference nodes.

In this embodiment, a link connection status is defined to indicate a connection level of a link between a to-be-deployed node and a deployed node, which, from a point of view of stability, may be respectively referred to as an ultra-stable connection status, a stable connection status, a fragile connection status and a disconnection status. Names of the above link connection statuses are differentiated by stabilities of the link connection statuses; however, this embodiment is not limited thereto, different link connection statuses may also be differentiated by other terms or names, and link connection statuses are not limited to the above four types, which may be more or less. In this embodiment, description is given taking the above four types of statuses as examples; however, such examples do not constitute limitations to this application. For the convenience of explanation, the above ultra-stable connection status is referred to as a first status, the above stable connection status is referred to as a second status, the above fragile connection status is referred to as a third status, and the above disconnection status is referred to as a fourth status.

In an implementation, a link connection status may be featured by average received signal strength (RSS) and a packet delivery ratio (PDR). In this implementation, status thresholds of the link connection statuses are preset, such as a received signal strength threshold and a packet delivery ratio threshold. The received signal strength threshold includes: a minimum received signal strength that is required to reach the first status, marked by $P_{ultra}$, a minimum received signal strength that is required to reach the second status, marked by $P_{stable}$, and a minimum received signal strength that is required to reach the third status, marked by $P_{connect}$. And the packet delivery ratio threshold includes: a minimum packet delivery ratio that is required to reach the first status, marked by $R_{ultra}$, a minimum packet delivery ratio that is required to reach the second status, marked by $R_{stable}$, and a minimum packet delivery ratio that is required to reach the third status, marked by $R_{connect}$.

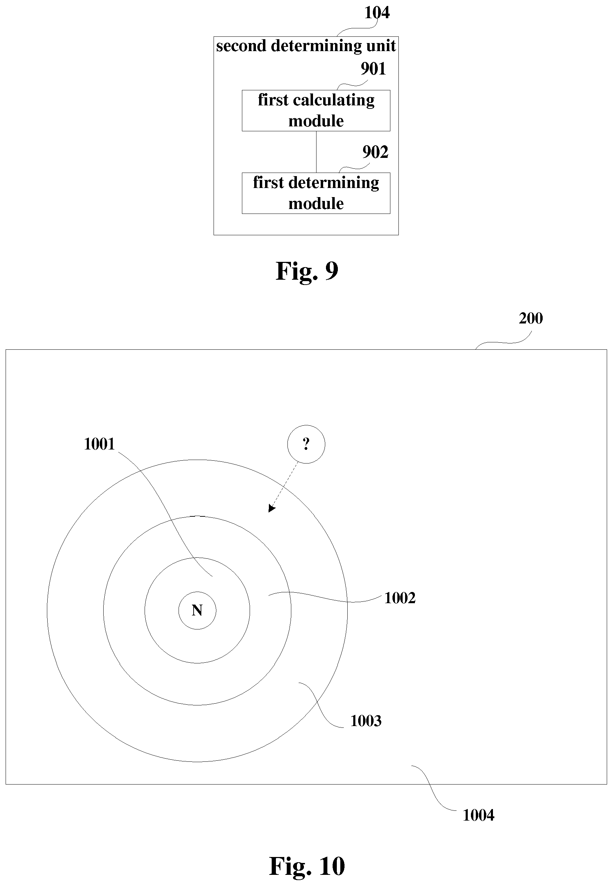

In this implementation, the second determining unit 104 may determine a link connection status of the auxiliary apparatus at the current position relative to each reference node according to an average RSS and PDR of link detection response packets transmitted by each reference node. FIG. 9 is a schematic diagram of an implementation of the second determining unit 104. As shown in FIG. 9, the second determining unit 104 includes a first calculating module 901 and a first determining module 902. The first calculating module 901 is configured to calculate average RSS and a PDR of the link detection response packets transmitted by each reference node, a particular calculation method is not limited in this embodiment. And the first determining module 902 is configured to determine the current link connection status of the auxiliary apparatus relative to the reference node according to the average RSS and the PDR and with reference to the above status thresholds.

For example, the auxiliary apparatus receives within the response await length link detection response packets periodically fed back by a reference node in a unicast manner, and by counting the average RSS and PDR of accumulatively received link detection response packets, the auxiliary apparatus compares the currently obtained average RSS with the received signal strength threshold (RSS threshold) representing a link connection status, and compares the currently obtained PDR with the packet delivery ratio threshold (PDR threshold) representing a link connection status, so as to judge to which of the above four link connection statuses the current link connection status belongs.

In this implementation, if the average RSS is greater than or equal to the minimum RSS that is required to reach the first status and the PDR is greater than or equal to the minimum PDR that is required to reach the first status, the first determining module 902 determines that a connection status of a link between the auxiliary apparatus at the current position and the reference node is the first status.

That is, if the average RSS of the link detection response packets transmitted by the reference node and accumulatively received by the auxiliary apparatus within the response await length is greater than or equal to $P_{ultra}$ and the PDR is greater than or equal to $R_{ultra}$, the auxiliary apparatus judges that the current link is in the above first status. Taking that the first status is the above ultra stable connection status as an example, the ultra stable connection status means that a current detecting position of the auxiliary apparatus is in a region where a connection status between the auxiliary apparatus and the reference node is ultra strong and a distance between the auxiliary apparatus and the reference node is very close. For example, let $P_{ultra}$ be -40dBm and $R_{ultra}$ be 99%, if the average RSS$\geq$-40dBm and the PDR$\geq$99%, the auxiliary apparatus judges that the current link connection status is an ultra stable connection status.

In this implementation, if the average RSS is greater than or equal to the minimum RSS that is required to reach the second status and is less than the minimum RSS that is required to reach the first status and the PDR is greater than or equal to the minimum PDR that is required to reach the second status, the first determining module 902 determines that the connection status of the link between the auxiliary apparatus at the current position and the reference node is the second status.

That is, if the average RSS of the link detection response packets transmitted by the reference node and accumulatively received by the auxiliary apparatus within the response await length is less than $P_{ultra}$ and is greater than or equal to $P_{stable}$ and the PDR is greater than or equal to $R_{stable}$, the auxiliary apparatus judges that the current link is in the above second status. The second status being the above stable connection status is taken as an example. For example, let $P_{ultra}$ be -40dBm and $P_{stable}$ be -85dBm and $R_{stable}$ be 90%, if the average RSS satisfies a relation -40dBm> the average RSS$\geq$ -85dBm and the PDR satisfies a relation PDR$\geq$90%, the auxiliary apparatus judges that the current link connection status is a stable connection status.

In this implementation, if the average RSS is greater than or equal to the minimum RSS that is required to reach the third status and is less than the minimum RSS that is required to reach the second status and the PDR is greater than or equal to the minimum PDR that is required to reach the third status, the first determining module 902 determines that the connection status of the link between the auxiliary apparatus at the current position and the reference node is the third status.

That is, if the average RSS of the link detection response packets transmitted by the reference node and accumulatively received by the auxiliary apparatus within the response await length is less than $P_{stable}$ and is greater than or equal to $P_{connect}$ and the PDR is greater than or equal to $R_{connect}$, the auxiliary apparatus judges that the current link is in the above third status. The third status being the above fragile connection status is taken as an example. For example, let $P_{stable}$ be -85dBm and $P_{connect}$ be -95dBm and $R_{connect}$ be 70%, if the average RSS satisfies -85dBm> the average RSS$\geq$ -95dBm and the PDR satisfies PDR$\geq$70%, the auxiliary apparatus judges that the current link connection status is a fragile connection status.

In this implementation, if the average RSS is less than the minimum RSS that is required to reach the third status and the PDR is less than the minimum PDR that is required to reach the third status, the first determining module 902 determines that the connection status of the link between the auxiliary apparatus at the current position and the reference node is the fourth status.

That is, if the average RSS of the link detection response packets transmitted by the reference node and accumulatively received by the auxiliary apparatus within the response await length is less than $P_{connect}$ and the PDR is less than $R_{connect}$, the auxiliary apparatus judges that the current link is in the above fourth status. The fourth status being the above disconnection status is taken as an example. For example, let $P_{connect}$ be -95dBm and $R_{connect}$ be 70%, if the average RSS<-95dBm and the PDR satisfies PDR<70%, the auxiliary apparatus judges that the current link connection status is a disconnection status.

In this embodiment, still taking the above-described four link connection statuses as an example, according to a link connection status, a surrounding of each deployed node is divided into four regions from the inside to the outside. FIG. 10 is schematic diagram of region division. As shown in FIG. 10, the four regions are respectively an equivalent deployment region 1001, a stable connection region 1002, a fragile connection region 1003 and a disconnection region 1004.

In the equivalent deployment region 1001, all connection statuses of links between to-be-deployed nodes at any positions and the current deployed node N indicate ultra stable connection statuses. The equivalent deployment region 1001 is divided relatively small, and any nodes within this region are in close proximity to the deployed node N. if a node is deployed in the region 1001, a special node which has functions identical to those of the current deployed node N and may be taken as a backup node of the current deployed node N may be deployed. If the current deployed node N is of the type of a sensor node, its equivalent deployment region may be deployed with a backup sensor node having the same functions. When the deployed node N becomes invalid or fails, the backup sensor node may replace the deployed node N to continue to guarantee functions of data collection and data upload in the region. If the current deployed node N is of a type of a relay node, a backup relay node having the same functions may be backed up in its equivalent deployment region. When the deployed node N becomes invalid or fails, the backup relay node may replace the deployed node N to continue to guarantee functions of data forwarding and relay in the region. Furthermore, the backup relay node may share tasks of data forwarding of the deployed node N and lower such burdens as network congestion, etc., when an amount of network data is relatively large or a bottleneck appears in network data transmission in the current region.

In the stable connection region 1002, all connection statuses of links between to-be-deployed nodes at any positions and the current deployed node N indicate stable connection statuses, and strength and stability of link connection in the region 1002 are only lower than those of the ultra stable connection region 1001.

In the fragile connection region 1003, all connection statuses of links between to-be-deployed nodes at any positions and the current deployed node N indicate fragile connection statuses. If nodes are deployed in the region 1003, general connection between to-be-deployed nodes and the deployed node N may be achieved; however, the link connection status is not very stable, and a case of frequently switching paths occurs sometimes.

In the disconnection region 1004, all connection statuses of links between to-be-deployed nodes and the current deployed node N indicate disconnection statuses. That is, the average RSS of the data packets transmitted by the deployed node N and received by the nodes within the region 1004 will be lower than $P_{connect}$ and the PDR will be lower than $R_{connect}$. It is hard for the nodes within the region 1004 to be connected to the deployed node N. Even if they are connected, connectivity is very poor, the received signal strength and the packet delivery ratio are very low, and such a link connection level is deemed as a disconnection status.

In this embodiment, the third determining unit 105 may determine the movement direction and distance of the auxiliary apparatus according to the link connection status of the auxiliary apparatus 100 relative to each reference node, thereby achieving deployment of nodes.

In this embodiment, according to a transmission model in consistence with a channel characteristic of a current detection region (such as a two-ray transmission channel model, a statistical transmission channel model, an empirical transmission channel model, or a transmission channel model obtained through experiments, etc.) the third determining unit 105 may calculate a current estimated distance between a position where the auxiliary apparatus is currently located and each reference node by using statistical information (such as received signal strength, etc.) obtained by the auxiliary apparatus from the continuously received link detection response packets, and prompt the distance to the personnel of network deployment in a real-time manner.

For example, a channel model pre-equipped in the auxiliary apparatus is a two-ray transmission channel model, which is expressed by formula (1):

$$P_r = \frac{P_t \times G_t \times G_r \times h_t^2 \times h_r^2}{d^4 \times L} \tag{1}.$$

According to the two-ray transmission channel model, on the premise of obtaining received power (i.e. the received signal strength RSS), a signal transmission distance may be obtained through calculation, which is expressed by formula (2):

$$d = \left( \frac{P_t \times G_t \times G_r \times h_t^2 \times h_r^2}{P_r \times L} \right)^{1/4} \tag{2}.$$

In this embodiment, the auxiliary apparatus continuously receives the link detection response packets from the deployed nodes within the response await length, and obtains the average RSS of the current accumulatively received signals through calculation, and according to the distance calculation formula derived from the two-ray model shown in formula (2), the third determining unit 105 may calculate an estimated distance between the auxiliary apparatus and a deployed node, which is expressed by formula (3):

$$d_{current} = \left( \frac{P_t \times G_t \times G_r \times h_t^2 \times h_r^2}{P_{current} \times L} \right)^{1/4} \tag{3}.$$

In this formula, $P_t$ is transmitting power, Gt is a gain of a transmitting antenna gain, $G_r$ is a gain of a receiving antenna, ht is the height of the transmitting antenna, $h_r$ is the height of the receiving antenna, L is a system loss factor, $P_{current}$ is signal received power at the current position (such as the average RSS of the current accumulatively received signals), and $d_{current}$ is the estimated distance between the auxiliary apparatus and the deployed node.

In this embodiment, according to the above-described status thresholds $P_{ultra}$, $P_{stable}$ and $P_{connect}$, the third determining unit 105 may respectively calculate a farthest distance satisfying each link connection status.

Formula (4) is a maximum node deployment theoretical distance satisfying the above-described first status:

$$d_{ultra} = \left( \frac{P_t \times G_t \times G_r \times h_t^2 \times h_r^2}{P_{ultra} \times L} \right)^{1/4} \tag{4}.$$

Formula (5) is a maximum node deployment theoretical distance satisfying the above-described second status:

$$d_{stable} = \left( \frac{P_t \times G_t \times G_r \times h_t^2 \times h_r^2}{P_{stable} \times L} \right)^{1/4} \tag{5}.$$

Formula (6) is a maximum node deployment theoretical distance satisfying the above-described third status:

$$d_{connect} = \left( \frac{P_t \times G_t \times G_r \times h_t^2 \times h_r^2}{P_{connect} \times L} \right)^{1/4} \tag{6}.$$

Meanings of letters in the above formulae are as described above, and shall not be described herein any further.

In this embodiment, no matter which of the connection status regions where the auxiliary apparatus is currently located, the third determining unit 105 may calculate the current estimated distance between the auxiliary apparatus and the deployed node by using the above-described method (such as formula (3)) and farthest distances satisfying the link connection statuses (such as formulae (4), (5) and (6)), and may finally calculate a distance needing to be moved in adjusting the auxiliary apparatus to a position satisfying an expected link connection status.

For example, the third determining unit 105 may calculate a least distance by which the to-be-deployed node represented by the auxiliary apparatus moves from the current position to a position at which the to-be-deployed node can obtain a certain link connection status when it needs to obtain the link connection status, and may further calculate a least distance by which the to-be-deployed node represented by the auxiliary apparatus moves from the current position to a position at which the to-be-deployed node can disconnect a certain link connection status when it needs to depart from the link connection status.

Formulae (7), (8) and (9) give methods for calculating a least distance by which a to-be-deployed node moves from the current position to a position at which the to-be-deployed node can obtain a certain link connection status (entering into a certain connection status region).

Formula (7) shows a method for calculating a minimum moving distance for obtaining the first status (such as the ultra stable connection status).

$$d_{move\ to\ ultra-stable} = d_{current} - d_{ultra} \quad (7);$$

where, $d_{movetoultrastable}$ denotes a minimum moving distance by which the auxiliary apparatus moves from the current position to a position at which the auxiliary apparatus can obtain the first status, and meanings and calculation methods of $d_{current}$ and $d_{ultra}$ are as described above.

Formula (8) shows a method for calculating a minimum moving distance for obtaining the second status (such as the stable connection status).

$$d_{move\ to\ stable} = d_{current} - d_{stable} \quad (8);$$

where, $d_{movetostable}$ denotes a minimum moving distance by which the auxiliary apparatus moves from the current position to a position at which the auxiliary apparatus can obtain the second status, and meanings and calculation methods of $d_{current}$ and $d_{stable}$ are as described above.

Formula (9) shows a method for calculating a minimum moving distance for obtaining the third status (such as a general connection status).

$$d_{move\ to\ connection} = d_{current} - d_{connect} \quad (9);$$

where, $d_{movetoconnect}$ denotes a minimum moving distance by which the auxiliary apparatus moves from the current position to a position at which the auxiliary apparatus can obtain the third status, and meanings and calculation methods of $d_{current}$ and $d_{connect}$ are as described above.

Formulae (10), (11) and (12) give the methods for calculating a least distance by which a to-be-deployed node moves from the current position to disconnect a certain link connection status (departing from a certain connection status region).

Formula (10) shows a method for calculating a minimum moving distance for departing from the first status (such as the ultra stable connection status).

$$d_{depart\ ultra-stable} = d_{ultra} - d_{current} \quad (10);$$

where, $d_{departultrastable}$ denotes a minimum moving distance by which the auxiliary apparatus moves from the current position to a position at which the auxiliary apparatus can depart from the first status, and meanings and calculation methods of $d_{current}$ and $d_{ultra}$ are as described above.

Formula (11) shows a method for calculating a minimum moving distance for departing from the second status (such as the stable connection status).

$$d_{depart\ stable} = d_{stable} - d_{current} \quad (11);$$

where, $d_{departstable}$ denotes a minimum moving distance by which the auxiliary apparatus moves from the current position to a position at which the auxiliary apparatus can depart from the second status, and meanings and calculation methods of $d_{current}$ and $d_{stable}$ are as described above.

Formula (12) shows a method for calculating a minimum moving distance for departing from the third status (such as the general connection status).

$$d_{depart\ connection} = d_{connect} - d_{current} \qquad (12);$$

where, $d_{departconnect}$ denotes a minimum moving distance by which the auxiliary apparatus moves from the current position to a position at which the auxiliary apparatus can reach the fourth status (depart from the third status), and meanings and calculation methods of $d_{current}$ and $d_{connect}$ are as described above.

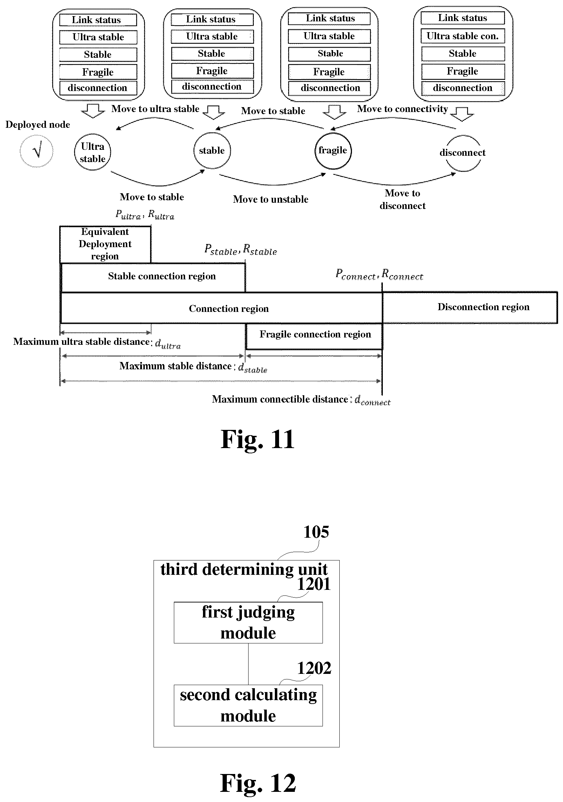

FIG. 11 is schematic diagram of transfer of the auxiliary apparatus between different link connection statuses.

In this embodiment, the auxiliary apparatus may further indicate the above results of calculation to the personnel of network deployment, assist the personnel of network deployment in obtaining reasonable opinions of adjusting the current deployment position, and help the personnel of network deployment find a more reasonable deployment position as demanded by deployment. And a particular indication manner shall be described later.

FIG. 12 is a schematic diagram of an implementation of the third determining unit 105. In this implementation, only one deployed node feeds back the above link detection response within the above response await length (the predetermined time), as described above, the deployed node being taken as the target reference node of the auxiliary apparatus.

As shown in FIG. 12, in this implementation, the third determining unit 105 includes a first judging module 1201 and a second calculating module 1202.

The first judging module 1201 is configured to judge whether the link connection status of the auxiliary apparatus relative to the target reference node is the second status (such as the stable connection status). If it is judged yes, it means that at the current position, the auxiliary apparatus is in the stable connection status relative to the target reference node, and nodes may be deployed at the current position. And if it is judged no, it means that at the current position, the auxiliary apparatus is not in the stable connection status relative to the target reference node, and nodes may not be deployed at the current position.

Hence, when it is judged yes by the first judging module 1201, the second calculating module 1202 may calculate a current distance of the auxiliary apparatus relative to the target reference node, and determine that both a movement direction and a movement distance of the auxiliary apparatus relative to the target reference node are 0 (not moving); and when it is judged no by the first judging module 1201, the second calculating module 1202 may determine the current distance, the movement direction and the movement distance of the auxiliary apparatus relative to the target reference node according to the link connection status of the auxiliary apparatus relative to the target reference node.

In this implementation, the link connection status of the auxiliary apparatus relative to the target reference node is determined by the second determining unit 104, and shall not be described herein any further.

In this implementation, the current distance of the auxiliary apparatus relative to the target reference node may be obtained through calculation by using formula (3), which shall not be described herein any further.

In this implementation, if the link connection status of the auxiliary apparatus relative to the target reference node is the third status or the fourth status, that is, the position where the auxiliary apparatus is currently located is in the fragile connection region or the disconnection region of the target reference node, the auxiliary apparatus is far away from the target reference node. If it is expected to achieve that the link connection status between the auxiliary apparatus and the target reference node is the second status (such as the stable connection status), the auxiliary apparatus needs to move towards the target reference node. And the second calculating module 1202 determines that the movement distance of the auxiliary apparatus relative to the target reference node may be $d_{move\ to\ stable}=d_{current} - d_{stable}$ and the movement direction may be a direction close to the target reference node, which may be, for example, expressed as +1.

In this implementation, $d_{current}$ is the current distance of the auxiliary apparatus relative to the target reference node, which may be obtained through calculation by using formula (3), $d_{stable}$ is a maximum theoretical distance of node deployment satisfying the second status, which may be obtained through calculation by using formula (5), and $d_{move\ to\ stable}$ is the minimum moving distance by which the auxiliary apparatus moves from the current position to a position at which the auxiliary apparatus can obtain the second status, which may be obtained through calculation by using formula (8).

In this implementation, if the link connection status of the auxiliary apparatus relative to the target reference node is the first status, that is, the position where the auxiliary apparatus is currently located is in the equivalent deployment region, the auxiliary apparatus is too near to the target reference node. If it is expected to achieve that the connection status between the auxiliary apparatus and the target reference node is the second status (such as the stable connection status), the auxiliary apparatus needs to move far away from the target reference node. And the movement distance of the auxiliary apparatus relative to the target reference node may be $d_{depart\ ultra-stable}=d_{ultra}-d_{current}$ and the movement direction may be a direction far away from the target reference node, which may be, for example, expressed as -1.

In this implementation, $d_{current}$ is the current distance of the auxiliary apparatus relative to the target reference node, which may be obtained through calculation by using formula (3), $d_{ultra}$ is a maximum theoretical distance of node deployment satisfying the first status, which may be obtained through calculation by using formula (4), and $d_{depart\ ultra-stable}$ is the minimum moving distance by which the auxiliary apparatus moves from the current position to a position at which the auxiliary apparatus can depart from the first status, which may be obtained through calculation by using formula (10).

In this implementation, after the information on the movement direction and movement distance are obtained, the information may be updated by an updating unit 108 of the auxiliary apparatus, and the above contents may be prompted by a prompting unit 109 of the auxiliary apparatus, so as to direct the personnel of wireless network deployment to move by a corresponding distance towards a corresponding direction according to the contents prompted by the auxiliary apparatus, thereby finding a relatively good position for deploying nodes and finishing the node deployment. The updating unit 108 and the prompting unit 109 shall be explained later.

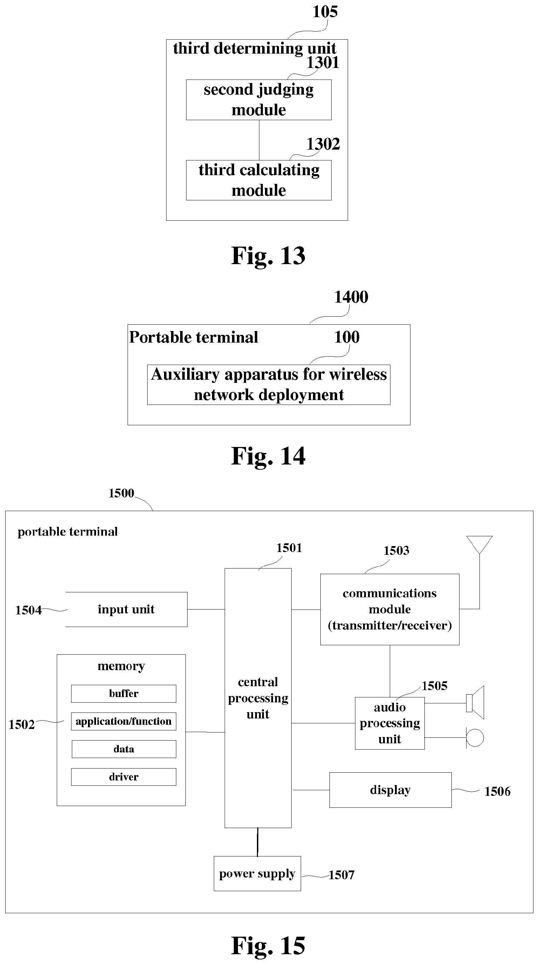

FIG. 13 is a schematic diagram of another implementation of the third determining unit 105. In this implementation, multiple deployed nodes feed back the above link detection responses within the above response await length (the predetermined time). In these deployed nodes, one deployed node is determined as the target reference node, and others are determined as the non-target reference nodes, which are as described above, and shall not be described herein any further.

As shown in FIG. 13, in this implementation, the third determining unit 105 includes a second judging module 1301 and a third calculating module 1302.

The second judging module 1301 is configured to judge whether a link connection status of the auxiliary apparatus relative to the target reference node is the second status (such as the stable connection status), and whether link connection statuses of the auxiliary apparatus relative to the non-target reference nodes are the fourth statuses (such as the disconnection status). If it is judged yes, it means that at the current position, the auxiliary apparatus is in the stable connection status relative to the target reference node and is in the disconnection status relative to the non-target reference nodes, and nodes may be deployed at the current position. And if it is judged no, it means that at the current position, the auxiliary apparatus is not in the stable connection status relative to the target reference node or is not in the disconnection status relative to the non-target reference nodes, and nodes may not be deployed at the current position.

Hence, when it is judged yes by the second judging module 1301, the third calculating module 1302 may calculate current distances of the auxiliary apparatus relative to the target reference node and the non-target reference nodes, and determine that movement directions and movement distances of the auxiliary apparatus relative to the target reference node and the non-target reference nodes are 0 (not moving); and when it is judged no by the second judging module 1301, the third calculating module 1302 may determine the current distances, the movement directions and the movement distances of the auxiliary apparatus relative to the target reference node and the non-target reference nodes according to the link connection statuses of the auxiliary apparatus relative to the target reference node and the non-target reference nodes.

In this implementation, the link connection statuses of the auxiliary apparatus relative to the target reference node and the non-target reference nodes are determined by the second determining unit 104, and shall not be described herein any further.

In this implementation, the current distances of the auxiliary apparatus relative to the target reference node and the non-target reference nodes may be obtained through calculation by using formula (3), which shall not be described herein any further.

In this implementation, if the link connection status of the auxiliary apparatus relative to the target reference node is the second status, it means that the auxiliary apparatus may not move relative to the target reference node, and the third calculating module 1302 determines that both the movement distance and movement direction of the auxiliary apparatus relative to the target reference node are 0.

In this implementation, if the link connection status of the auxiliary apparatus relative to the target reference node is the third status or the fourth status, it means that the auxiliary apparatus is far away from the target reference node, and it is insufficient to reach the stable connection status. The auxiliary apparatus needs to move towards the target reference node. And the third calculating module 1302 determines that the movement distance of the auxiliary apparatus relative to the target reference node may be $d_{move\ to\ stable}=d_{current}-d_{stable}$ and the movement direction may be a direction close to the target reference node, which may be, for example, expressed as +1. In this implementation, meanings and calculation methods of $d_{move\ to\ stable}$, $d_{current}$ and $d_{stable}$ are as described above.

In this implementation, if the link connection status of the auxiliary apparatus relative to the target reference node is the first status, it means that the auxiliary apparatus is too near to the target reference node and the stable connection status may also not be reached. The auxiliary apparatus needs to move far away from the target reference node. And the third calculating module 1302 determines that the movement distance of the auxiliary apparatus relative to the target reference node may be $d_{depart\ ultra\text{-}stable}=d_{ultra}\text{-}d_{current}$ and the movement direction may be a direction far away from the target reference node, which may be, for example, expressed as -1. In this implementation, meanings and calculation methods of $d_{depart\ ultra\text{-}stable}$, $d_{current}$ and $d_{ultra}$ are as described above.

In this implementation, if it is expected to achieve that the link connection status between the auxiliary apparatus and the target reference node is the second status, (such as the stable connection status) and the link connection statuses between the auxiliary apparatus and the non-target reference nodes are the fourth statuses (such as the disconnection statuses), the link connection statuses between the auxiliary apparatus and the non-target reference nodes are need to be referred to. And if the link connection statuses are not the fourth status, the auxiliary apparatus needs to move in a direction far away from the non-target reference nodes, so as to reach the fourth status.

In this implementation, if the link connection status of the auxiliary apparatus relative to a non-target reference node is the first status or the second status or the third status, it means that the auxiliary apparatus needs to move in the direction far away from the non-target reference node. And the third calculating module 1302 determines that the movement distance of the auxiliary apparatus relative to the non-target reference node may be $d_{depart\ connection}=d_{connect}\text{-}d_{current}$ and the movement direction may be a direction far away from the non-target reference node, which may be, for example, expressed as -1.

In this implementation, $d_{current}$ is the current distance of the auxiliary apparatus relative to the non-target reference node, which may be obtained through calculation by using formula (3), $d_{connect}$ is a maximum theoretical distance of node deployment satisfying the third status, which may be obtained through calculation by using formula (6), and $d_{depart\ connection}$ is the minimum moving distance by which the auxiliary apparatus moves from the current position to a position at which the auxiliary apparatus can reach the fourth status (leaving the third status), which may be obtained through calculation by using formula (12).

In this implementation, if the link connection status of the auxiliary apparatus relative to a non-target reference node is the fourth status, it means that the position of the auxiliary apparatus relative to the non-target reference node is an expected position, and the auxiliary apparatus may not move relative to the non-target reference node, and the third calculating module 1302 determines that both the movement distance and movement direction of the auxiliary apparatus relative to the non-target reference node are 0.

In this implementation, similar to the implementation shown in FIG. 12, after the information on the movement direction and movement distance are obtained, the information may be updated by the updating unit 108 of the auxiliary apparatus, and the above contents may be shown by the prompting unit 109 of the auxiliary apparatus, so as to direct the personnel of wireless network deployment to move by a corresponding distance towards a corresponding direction according to the contents prompted by the auxiliary apparatus, thereby finding a relatively good position for deploying nodes and finishing the node deployment. The updating unit 108 and the prompting unit 109 shall be explained later.

In this embodiment, as shown in FIG. 1, the auxiliary apparatus 100 may further include the updating unit 108, which is configured to update a link status table according to the link connection status of the auxiliary apparatus relative to each deployed node feeding back the link detection responses within the above predetermined time. Table 1 is an example of the link status table. As show in Table 1, the link status table may include multiple items, each item including one or more of the following information, and may further include other information that is not listed.

| Reference node address | Average RSS | PDR | Link connection status | Target node indicator | Current distance | Movement direction | Movement distance |
|---|---|---|---|---|---|---|---|
| ... | ... | ... | ... | ... | ... | ... | ... |
| ... | ... | ... | ... | ... | ... | ... | ... |

In this embodiment, the reference node address (neighbor address) indicates an address of a source node feeding back a link detection response packet. The average RSS indicates the average received signal strength of the link detection response packets continuously received by the auxiliary apparatus within the response await length. The packet delivery ratio PDR indicates a statistical packet delivery ratio of the link detection response packets continuously received by the auxiliary apparatus within the response await length. The link connection status (link status) indicates a connection status of a current link between the auxiliary apparatus and a corresponding reference node, a type of the link connection status being as described above. The target node indicator indicates whether a current reference node is determined as a target reference node; for example, if the current reference node is a target reference node, the item is marked by 1; otherwise, the item is marked by 0. The current distance indicates a distance between the auxiliary apparatus and a current corresponding reference node. The movement direction indicates a current movement direction of the auxiliary apparatus relative to the corresponding reference node adjusted by the personnel of network deployment; for example, "0" indicates that the current position is in consistence with a needed link connection status and the auxiliary apparatus needs not to move, "1" indicates that the auxiliary apparatus currently needs to move towards the corresponding reference node, and "-1" indicates that the auxiliary apparatus currently needs to move in a direction far away from the corresponding reference node. And the movement distance indicates a distance needing to be adjusted for the auxiliary apparatus to move in a direction indicated by the item of movement direction to reach a needed link connection status between the auxiliary apparatus and the corresponding reference node, and if the current position is in consistence with the needed link connection status, the movement distance is marked by 0.

In this embodiment, the updating unit 108 may further update the link status table according to a calculation result of the third determining unit 105, such as updating the items in the link status table corresponding to the target reference node and/or corresponding to the non-target reference nodes, including the average RSS, the PDR, the link connection status, the target node indicator, the current distance, the movement distance, and the movement direction, etc.

In this embodiment, the auxiliary apparatus continuously receives the link detection response packets periodically fed back by the surrounding deployed nodes within the response await length, takes each source node feeding back the link detection response packet as the reference node, and records the link connection status between each reference node and the auxiliary apparatus. The auxiliary apparatus maintains a link status table in a real-time manner. The link connection status between each reference node and the auxiliary apparatus will be recorded in the link status table and indicated to the personnel of network deployment, so that the personnel of network deployment may grasp each link connection status at the current to-be-deployed position in a real-time manner in deploying nodes.

In this embodiment, as shown in FIG. 1, the auxiliary apparatus further includes the prompting unit 109, which is configured to prompt contents of the link status table updated by the updating unit 108, for example, in a displaying manner, so that the personnel of network deployment may grasp each link connection status at the current to-be-deployed position in a real-time manner in deploying nodes. And a prompting manner is not limited in this embodiment.

With the apparatus of this embodiment, not only deployment of a stable and high-efficiency wireless network transmission system may be guaranteed, but also working amounts and complexity of the personnel of network deployment as well as a large amount of network deployment periods may be saved.

Embodiment 2

An embodiment further provides a portable terminal. FIG. 14 is a schematic diagram of the portable terminal. As shown in FIG. 14, the portable terminal 1400 includes the auxiliary apparatus 100 as described in Embodiment 1. As the auxiliary apparatus 100 has been described in detail in Embodiment 1, the contents of which are incorporated herein, and are not be described herein any further.

FIG. 15 is a block diagram of a systematic structure of the portable terminal of this embodiment. As shown in FIG. 15, the portable terminal 1500 may include a central processing unit 1501 and a memory 1502, the memory 1502 being coupled to the central processing unit 1501. It should be noted that this figure is illustrative only, and other types of structures may also be used, so as to supplement or replace this structure and achieve telecommunications function or other functions.

In an implementation, the functions of the auxiliary apparatus 100 described in Embodiment 1 may be integrated into the central processing unit 1501. For example, the central processing unit 1501 may be configured to:

broadcast a link detection request;
collect link detection responses received within a predetermined time;
taking nodes transmitting the link detection response as reference nodes, determine a target reference node and non-target reference nodes of the portable terminal;
determine a link connection status of the portable terminal relative to each reference node according to the link detection responses; and
determine a movement direction and distance of the portable terminal according to the link connection status of the apparatus relative to each reference node.

In another implementation, the auxiliary apparatus 100 described in Embodiment 1 and the central processing unit 1501 may be configured separately. For example, the auxiliary apparatus 100 described in Embodiment 1 may be configured as a chip connected to the central processing unit 1501, with its functions being realized under control of the central processing unit 1501.

As shown in FIG. 15, the portable terminal 1500 may further include a communications module 1503, an input unit 1504, an audio processing unit 1505, a display 1506 and a power supply 1507. It should be noted that the portable terminal 1500 does not necessarily include all the parts shown in FIG. 15, and furthermore, the portable terminal 1500 may include parts not shown in FIG. 15, and the relevant art may be referred to.

As shown in FIG. 15, the central processing unit 1501 is sometimes referred to as a controller or control, and may include a microprocessor or other processor devices and/or logic devices. The central processing unit 1501 receives input and controls operations of every components of the portable terminal 1500.

In this embodiment, the memory 1502 may be, for example, one or more of a buffer memory, a flash memory, a hard drive, a mobile medium, a volatile memory, a nonvolatile memory, or other suitable devices, which may store the above link status table, and may further store a program executing a related method. And the central processing unit 1501 may execute the program stored in the memory 1502, so as to realize information storage or processing, etc. Functions of other parts are similar to those of the relevant art, which shall not be described herein any further. The parts of the portable terminal 1500 may be realized by specific hardware, firmware, software, or any combination thereof, without departing from the scope of the present disclosure.

With the portable terminal of this embodiment, not only deployment of a stable and high-efficiency wireless network transmission system may be guaranteed, but also working amounts and complexity of the personnel of network deployment as well as a large amount of network deployment periods may be saved.

Embodiment 3

An embodiment of this disclosure further provides a method for wireless network deployment. As principles of the method for solving problems are similar to that of the apparatus in Embodiment 1, the implementation of the apparatus in Embodiment 1 may be referred to for implementation of the method, with identical contents being not going to be described herein any further.

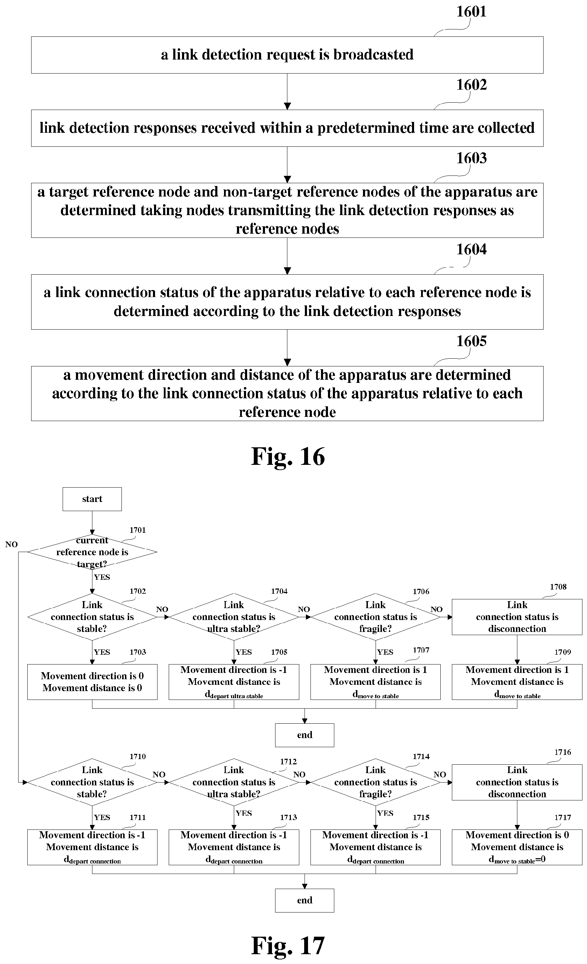

FIG. 16 is a flowchart of an implementation of the method. As shown in FIG. 16, the method includes:

> step 1601: a link detection request is broadcasted;
> step 1602: link detection responses received within a predetermined time are collected;
> step 1603: a target reference node and non-target reference nodes of the apparatus are determined taking nodes transmitting the link detection responses as reference nodes;
> step 1604: a link connection status of the apparatus relative to each reference node is determined according to the link detection responses; and
> step 1605: a movement direction and distance of the apparatus are determined according to the link connection status of the apparatus relative to each reference node.

In this embodiment, the personnel of network deployment bring the auxiliary apparatus of this embodiment to a node to-be-deployed region in deploying nodes in a target region, and start a detection process of a connection status of links between the auxiliary apparatus and surrounding deployed nodes. After the detection process of a link connection status is started, the auxiliary apparatus first broadcasts the link detection request packets to the surrounding nodes (step 1601), starts a clock back-off mechanism at the same time, waits for the surrounding nodes to feed back link detection response packets, and set a response await length (step 1602). If there exists a deployed node in a region surrounding a position where the auxiliary apparatus for network deployment is located, and the deployed node receives the link detection request packets broadcasted by the auxiliary apparatus for network deployment, the deployed node will periodically feed back link detection response packets in a unicast manner to the auxiliary apparatus. And each deployed node feeding back link the detection response packets will be taken as a reference node by the auxiliary apparatus.

In this embodiment, an order of executing step 1603 and step 1604 is not limited. For example, step 1604 may be executed first, and then step 1603 is executed, or the two steps may be executed at the same time, or step 1603 may be executed in step 1605.

In an implementation, according to the accumulatively received link detection response packets, the auxiliary apparatus counts and records average RSS and a PDR of the link detection response packets transmitted by each reference node, judges and records the connection status of the link between the auxiliary apparatus and corresponding reference node according to the average RSS and PDR, judges and marks whether a current reference node is a target reference node, calculates and records current distance between the auxiliary apparatus and the reference node according to the average RSS, and determines and records the movement direction and distance of the auxiliary apparatus relative to the reference node (step 1605). And the recorded and marked contents are updated in the above-described link status table and prompted in a real-time manner.

FIG. 17 is a flowchart of an implementation of determining the movement direction and distance according to link connection statuses. Referring to FIG. 17, the flow includes:

> step 1701: it is judged whether a current node is a target reference node, and step 1702 is executed if yes, otherwise, step 1710 is executed;
> in this implementation, if the current corresponding reference node is determined as the target reference node, the position where the auxiliary apparatus is located needs to be in a stable connection region of the target reference node; and in order that the auxiliary apparatus is in the stable connection region of the target reference node, the auxiliary apparatus will perform the following operation: determining the movement direction and movement distance to direct the personnel of network deployment to adjust the current position of the auxiliary apparatus to find out the stable connection region of the target reference node;

step 1702: it is judged whether the link connection status is the stable connection status, and step 1703 is executed if yes, otherwise, step 1704 is executed;

step 1703: it is indicated that both the movement direction and movement distance are 0;

in such a case, the link connection status between the auxiliary apparatus and the target reference node is determined as reaching the stable connection status, and it may be determined that the current position where the auxiliary apparatus is located is in the stable connection region of the target reference node; position adjustment is unnecessary, the movement direction is marked by 0, and movement distance is marked by 0;

step 1704: it is judged whether the link connection status is an ultra stable connection status, and step 1705 is executed if yes, otherwise, step 1706 is executed;

step 1705: it is indicated that the movement direction is -1, and the movement distance is $d_{\text{depart ultra-stable}}$;

in such a case, the link connection status between the auxiliary apparatus and the target reference node is determined as being in the ultra stable connection status, which means that the auxiliary apparatus is currently too close to the target reference node and is in the equivalent deployment region of the target reference node, it is judged that the position of the auxiliary apparatus needs to be adjusted, and the auxiliary apparatus needs to be moved to the stable connection region where the auxiliary apparatus and the target reference node reach the stable connection status; as the stable connection region is far away from the target reference node relative to the equivalent connection region, it is needed to move the auxiliary apparatus in a direction far away from the target reference node; as described above, the movement direction away from the target reference node is marked by -1, and the movement distance is obtained through calculation by using above-described formula (10);

step 1706: it is judged whether the link connection status is the fragile connection status, and step 1707 is executed if yes, otherwise, step 1708 is executed;

step 1707: it is indicated that the movement direction is +1, and the movement distance is $d_{\text{move to stable}}$;

in such a case, the link connection status between the auxiliary apparatus and the target reference node is determined as being in the fragile connection status, which means that the auxiliary apparatus is currently located in the fragile connection region of the target reference node, it is judged that the position of the auxiliary apparatus needs to be adjusted, and the auxiliary apparatus needs to be moved to the stable connection region where the auxiliary apparatus and the target reference node reach the stable connection status; as the stable connection region is close to the target reference node relative to the fragile connection region, it is needed to move the auxiliary apparatus in a direction towards the target reference node; as described above, the movement direction towards the target reference node is marked by +1, and the movement distance is obtained through calculation by using above-described formula (8);

step 1708: it is determined that the link connection status is the disconnection status;

step 1709: it is indicated that the movement direction is +1, and the movement distance is $d_{\text{move to stable}}$;

in such a case, the link connection status between the auxiliary apparatus and the target reference node is determined as being in the disconnection status, which means that the auxiliary apparatus is currently located in the disconnection region of the target reference node, it is judged that the position of the auxiliary apparatus needs to be adjusted, and the auxiliary apparatus needs to be moved to the stable connection region where the auxiliary apparatus and the target reference node reach the stable connection status; as the stable connection region is close to the target reference node relative to the disconnection region, it is needed to move the auxiliary apparatus in a direction towards the target reference node; as described above, the movement direction towards the target reference node is marked by +1, and the movement distance is obtained through calculation by using above-described formula (8);

step 1710: it is judged whether the link connection status is the stable connection status, and step 1711 is executed if yes, otherwise, step 1712 is executed;

in this implementation, if the current corresponding reference node is determined as a general reference node (another source node feeding back the link detection response packets), i.e. a non-target reference node, the position where the auxiliary apparatus is located needs to be located in a disconnection region of the general reference node; and in order that the auxiliary apparatus is located in the disconnection region of the non-target reference node, the auxiliary apparatus will perform the following operation: determining the movement direction and movement distance to direct the personnel of network deployment to adjust the current position of the auxiliary apparatus to find out the disconnection region corresponding to the non-target reference node;

step 1711: it is indicated that the movement direction is -1, and the movement distance is $d_{\text{depart connection}}$;

in such a case, the link connection status between the auxiliary apparatus and the non-target reference node is determined as being in the stable connection status, which means that the auxiliary apparatus is currently too close to the non-target reference node and is in the stable connection region of the non-target reference node, it is judged that the position of the auxiliary apparatus needs to be adjusted, and the auxiliary apparatus needs to be moved to the disconnection region where the auxiliary apparatus and the non-target reference node reach the disconnection status; as the disconnection region is far away from the current non-target reference node relative to the stable connection region, it is needed to move the auxiliary apparatus in a direction away from the non-target reference node; as described above, the movement direction away from the non-target reference node is marked by -1, and the movement distance is obtained through calculation by using above-described formula (12);

step 1712: it is judged whether the link connection status is the ultra stable connection status, and step 1713 is executed if yes, otherwise, step 1714 is executed;

step 1713: it is indicated that the movement direction is -1, and the movement distance is $d_{depart\ connection}$;

in such a case, the link connection status between the auxiliary apparatus and the non-target reference node is determined as being in the ultra stable connection status, which means that the auxiliary apparatus is currently too close to the non-target reference node and is located in the equivalent deployment region of the current non-target reference node, it is judged that the position of the auxiliary apparatus needs to be adjusted, and the auxiliary apparatus needs to be moved to the disconnection region where the auxiliary apparatus and the non-target reference node reach the disconnection status; as the disconnection region is far away from the current non-target reference node relative to the equivalent deployment region, it is needed to move the auxiliary apparatus in a direction away from the non-target reference node; as described above, the movement direction away from the non-target reference node is marked by -1, and the movement distance is obtained through calculation by using above-described formula (12);

step 1714: it is judged whether the link connection status is the fragile connection status, and step 1715 is executed if yes, otherwise, step 1716 is executed;

step 1715: it is indicated that the movement direction is -1, and the movement distance is $d_{depart\ connection}$;

in such a case, the link connection status between the auxiliary apparatus and the non-target reference node is determined as being in the fragile connection status, which means that the auxiliary apparatus is currently still close to the non-target reference node and is in the fragile connection region of the non-target reference node, it is judged that the position of the auxiliary apparatus needs to be adjusted, and the auxiliary apparatus needs to be moved to the disconnection region where the auxiliary apparatus and the non-target reference node reach the disconnection status; as the disconnection region is far away from the current non-target reference node relative to the fragile connection region, it is needed to move the auxiliary apparatus in a direction away from the non-target reference node; as described above, the movement direction away from the non-target reference node is marked by -1, and the movement distance is obtained through calculation by using above-described formula (12);

step 1716: it is determined that the link connection status is the disconnection status; and

step 1717: it is indicated that the movement direction is 0, and the movement distance is 0;

in such a case, the link connection status between the auxiliary apparatus and the current non-target reference node is determined as being in the disconnection status, and it may be determined that the position where the auxiliary apparatus is currently located is in the disconnection region of the current non-target reference node; and the position adjustment is unnecessary, the movement direction is marked by 0, and movement distance is marked by 0.

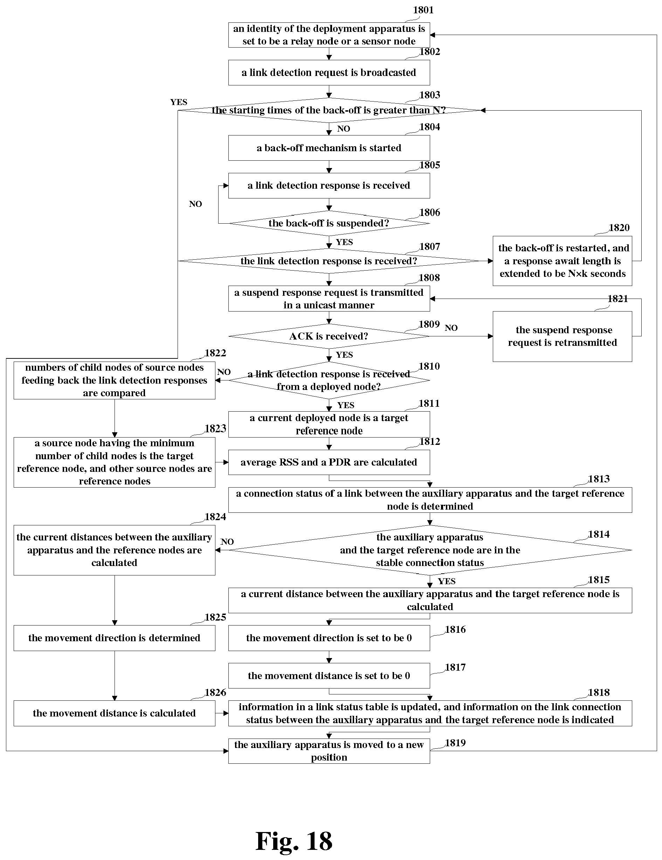

FIG. 18 is a flowchart of another implementation of the method for wireless network deployment. Referring to FIG. 18, the method includes:

step 1801: an identity of the deployment apparatus (the auxiliary apparatus) is set to be a relay node or a sensor node;

step 1802: a link detection request is broadcasted;

step 1803: it is judged whether the starting times of the back-off is greater than N, and step 1819 is executed if yes, otherwise, step 1804 is executed;

step 1804: a back-off mechanism is started;

step 1805: a link detection response is received;

step 1806: it is judged whether the back-off is suspended, and step 1807 is executed if yes, otherwise, the process turns back to step 1805;

step 1807: it is judged whether the link detection response is received, and step 1808 is executed if yes, otherwise, step 1820 is executed;

step 1808: a suspend response request is transmitted in a unicast manner;

step 1809: it is judged whether ACK is received, and step 1810 is executed if yes, otherwise, step 1821 is executed;

step 1810: it is judged whether a link detection response is received from a deployed node, and step 1811 is executed if yes, otherwise, step 1822 is executed;

step 1811: it is determined that a current deployed node is a target reference node;

step 1812: average RSS and a PDR are calculated;

step 1813: a connection status of a link between the auxiliary apparatus and the target reference node is determined;

step 1814: it is judged whether the auxiliary apparatus and the target reference node are in the stable connection status, and step 1815 is executed if yes, otherwise, step 1824 is executed;

step 1815: a current distance between the auxiliary apparatus and the target reference node is calculated;

step 1816: the movement direction is set to be 0;

step 1817: the movement distance is set to be 0;

step 1818: information in a link status table is updated, and information on the link connection status between the auxiliary apparatus and the target reference node is indicated;

step 1819: the auxiliary apparatus is moved to a new position;

step 1820: the back-off is restarted, and a response await length is extended to be Nxk seconds;

step 1821: the suspend response request is retransmitted;

step 1822: numbers of child nodes of source nodes feeding back the link detection responses are compared;

step 1823: it is determined that a source node having the minimum number of child nodes is the target reference node, and other source nodes are reference nodes, and the process turns back to step 1812;

at this moment, in step 1812, average RSS and a PDR are calculated for each source node, in subsequent step 1813, the connection status of the link between the auxiliary apparatus and the target reference node and the connection statuses of the links between the auxiliary apparatus and the reference nodes are determined, and in subsequent step 1814, whether the auxiliary apparatus and the target reference node are in the stable connection status is judged, and whether the auxiliary apparatus and the reference nodes are in the disconnection status is judged; if it is judged yes, in step 1815, current distances between the auxiliary apparatus and the reference nodes are calculated, and in subsequent step 1818, the information in the link status table is updated, and information on the link connection statuses between the auxiliary apparatus and the reference nodes is indicated; and if it is judged no, step 1824 is executed;

step 1824: the current distances between the auxiliary apparatus and the reference nodes are calculated;

step 1825: the movement direction is determined; and

step 1826: the movement distance is calculated, and the process turns back to step 1818.

In step 1818, the information in the link status table is updated, and the information on link connection statuses between the auxiliary apparatus and the reference nodes are indicated.

With the method provided by the embodiment of this disclosure, not only the personnel of network deployment are assisted in feeding back the link connection statuses in performing network deployment and the personnel of network deployment are helped accurately to find a node deployment position of stable connection in a relatively short period of time, but also it may be taken as an exploration tool, and by using the tool for performing a large amount of detailed measurement in the target deployment region, regions of different connection statuses surrounding each node may be obtained, and may assist other analysis tools, such as simulation, in obtaining an optimal deployment scheme of the whole of the network.

An embodiment of the present disclosure provides a computer readable program code, which, when executed in a portable terminal, will cause a computer unit to carry out the method as described in Embodiment 3 in the portable terminal.

An embodiment of the present disclosure provides a computer readable medium, including a computer readable program code, which will cause a computer unit to carry out the method as described in Embodiment 3 in a portable terminal.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

For implementations of the present disclosure containing the above embodiments, following statements are further disclosed.

Statement 1. An auxiliary apparatus for wireless network deployment, including:

a transmitting unit configured to broadcast a link detection request;

a collecting unit configured to collect link detection responses received within a predetermined time;

a first determining unit configured to, taking nodes transmitting the link detection response as reference nodes, determine a target reference node and non-target reference nodes of the apparatus;

a second determining unit configured to determine a link connection status of the apparatus relative to each reference node according to the link detection responses; and

a third determining unit configured to determine a movement direction and distance of the apparatus according to the link connection status of the apparatus relative to each reference node.

Statement 2. The apparatus according to statement 1, wherein when only one reference node transmits the link detection responses, the first determining unit determines that the reference node is the target reference node of the apparatus, and when multiple reference nodes transmit the link detection responses, the first determining unit determines that a reference node of lowest payload in the multiple reference nodes is the target reference node of the apparatus, and other reference nodes in the multiple reference nodes are non-target reference nodes of the apparatus.

Statement 3. The apparatus according to statement 1, wherein the second determining unit includes:

a first calculating module configured to calculate average receiving signal strength (RSS) and a packet delivery rate (PDR) of the link detection responses transmitted by each reference node; and

a first determining module configured to determine the link connection status of the apparatus relative to each reference node according to the average RSS and the PDR.

Statement 4. The apparatus according to statement 3, wherein,

when the average RSS is greater than or equal to a minimum RSS that is required to reach a first status and the PDR is greater than or equal to a minimum PDR that is required to reach the first status, the first determining module determines that a connection status of a link between the apparatus and the reference node is the first status;

when the average RSS is greater than or equal to a minimum RSS that is required to reach a second status and is less than the minimum RSS that is required to reach the first status and the PDR is greater than or equal to a minimum PDR that is required to reach the second status, the first determining module determines that the connection status of the link between the apparatus and the reference node is the second status;

when the average RSS is greater than or equal to a minimum RSS that is required to reach a third status and is less than the minimum RSS that is required to reach the second status and the PDR is greater than or equal to a minimum PDR that is required to reach the third status, the first determining module determines that the connection status of the link between the apparatus and the reference node is the third status;

and when the average RSS is less than the minimum RSS that is required to reach the third status and the PDR is less than the minimum PDR that is required to reach the third status, the first determining module determines that the connection status of the link between the apparatus and the reference node is a fourth status.

Statement 5. The apparatus according to statement 1, wherein the third determining unit includes:

a first judging module configured to, when only the target reference node transmits the link detection responses, judge whether a link connection status of the apparatus relative to the target reference node is the second status;

a second calculating module configured to, when it is judged yes by the first judging module, calculate a current distance of the apparatus relative to the target reference node, and determine that both a movement direction and a movement distance of the apparatus relative to the target reference node are 0; and when it is judged no by the first judging module, determine the current distance, the movement direction and the movement distance of the apparatus relative to the target reference node according to the link connection status of the apparatus relative to the target reference node.

Statement 6. The apparatus according to statement 5, wherein the second calculating module calculates the current distance of the apparatus relative to the target reference node according to the formula below:

$$d_{current} = \left( \frac{P_t \times G_t \times G_r \times h_t^2 \times h_r^2}{P_{current} \times L} \right)^{1/4} ;$$

where, $P_t$ is transmitting power, $G_t$ is a gain of a transmitting antenna, $G_r$ is a gain of a receiving antenna, $h_t$ is the height of the transmitting antenna, $h_r$ is the height of the receiving antenna, L is a system loss factor, and $P_{current}$ is receiving signal strength RSS of a current position;

wherein, if the link connection status of the apparatus relative to the target reference node is the third status or the fourth status, the second calculating module calculates the movement distance of the apparatus relative to the target reference node according to a formula $d_{move\ to\ stable} = d_{current} - d_{stable}$, and determines that the movement direction is a direction close to the target reference node;

and wherein, if the link connection status of the apparatus relative to the target reference node is the first status, the second calculating module calculates the movement distance of the apparatus relative to the target reference node according to a formula $d_{depart\ ultra\text{-}stable} = d_{ultra} - d_{current}$, and determines that the movement direction is a direction away from the target reference node;

where, $d_{current}$ is the current distance of the apparatus relative to the target reference node, $d_{stable}$ is a maximum theoretical distance of node deployment satisfying the second status, and $d_{ultra}$ is a maximum theoretical distance of node deployment satisfying the first status.

Statement 7. The apparatus according to statement 1, wherein the third determining unit includes:

a second judging module configured to, when a non-target reference node, besides the target reference node, transmits the link detection responses, judge whether a link connection status of the apparatus relative to the target reference node is a second status, and whether a link connection status of the apparatus relative to the non-target reference node is a fourth status;

a third calculating module configured to, when it is judged yes by the second judging module, calculate current distances of the apparatus relative to the target reference node and the non-target reference node, and determine that both a movement direction and a movement distance of the apparatus relative to the target reference node and the non-target reference node are 0; and when it is judged no by the second judging module, determine the current distance, the movement direction and the movement distance of the apparatus relative to the target reference node and the non-target reference node according to the link connection status of the apparatus relative to the target reference node and the non-target reference node.

Statement 8. The apparatus according to statement 7, wherein the third calculating module calculates the current distances of the apparatus relative to the target reference node and the non-target reference node according to the formula below:

$$d_{current} = \left( \frac{P_t \times G_t \times G_r \times h_t^2 \times h_r^2}{P_{current} \times L} \right)^{1/4};$$

where, $P_t$ is transmitting power, $G_t$ is a gain of a transmitting antenna, $G_r$ is a gain of a receiving antenna, $h_t$ is the height of the transmitting antenna, $h_r$ is the height of the receiving antenna, $L$ is a system loss factor, and $P_{current}$ is receiving signal strength RSS of a current position;

wherein, if the link connection status of the apparatus relative to the target reference node is the second status, the third calculating module determines that both the movement direction and the movement distance of the apparatus relative to the target reference node are 0;

wherein, if the link connection status of the apparatus relative to the target reference node is a third status or the fourth status, the third calculating module calculates the movement distance of the apparatus relative to the target reference node according to a formula $d_{move\ to\ stable} = d_{current} - d_{stable}$, and determines that the movement direction is a direction close to the target reference node;

wherein, if the link connection status of the apparatus relative to the target reference node is a first status, the third calculating module calculates the movement distance of the apparatus relative to the target reference node according to a formula $d_{depart\ ultra\text{-}stable} = d_{ultra} - d_{current}$, and determines that the movement direction is a direction away from the target reference node;

where, $d_{current}$ is the current distance of the apparatus relative to the target reference node, $d_{stable}$ is a maximum theoretical distance of node deployment satisfying the second status, and $d_{ultra}$ is a maximum theoretical distance of node deployment satisfying the first status;

wherein, if the link connection status of the apparatus relative to the non-target reference node is the first status or the second status or the third status, the third calculating module calculates the movement distance of the apparatus relative to the non-target reference node according to a formula $d_{depart\ connection} = d_{connect} - d_{current}$, and determines that the movement direction is a direction away from the target reference node; where, $d_{current}$ is the current distance of the apparatus relative to the non-target reference node, $d_{connect}$ is a maximum theoretical distance of node deployment satisfying the third status;

and wherein, if the link connection status of the apparatus relative to the non-target reference node is the fourth status, the third calculating module determines that both the movement direction and the movement distance of the apparatus relative to the non-target reference node are 0.

Statement 9. The apparatus according to statement 1, wherein the apparatus further includes:

an updating unit configured to update a link status table according to the link connection status of the apparatus relative to each reference node.

Statement 10. The apparatus according to statement 1, wherein the apparatus further includes:

a prompting unit configured to prompt the link status table updated by the updating unit.

Statement 11. The apparatus according to statement 1, wherein the apparatus further includes:

a starting unit configured to start back-off after the transmitting unit broadcasts the link detection request, so as to wait for the link detection responses transmitted by the deployed nodes, set a response await length to be a first predetermined period of time, so that the collecting unit collects the link detection responses received within the first predetermined period of time.

Statement 12. The apparatus according to statement 11, wherein the apparatus further includes:

a judging unit configured to judge whether the response await length exceeds a predetermined maximum await length, terminate the processing if it is judged yes, and notify the collecting unit to perform subsequent processing if it is judged no.

Statement 13. The apparatus according to statement 11, wherein after the collecting unit collects the link detection response within the response await length, the transmitting unit further transmits a suspend response request to a deployed node feeding back the link detection response, notifying the deployed node to suspend feeding back the link detection response.

Statement 14. The apparatus according to statement 13, wherein when the collecting unit does not receive acknowledgement information fed back by the deployed node but still receives the link detection response transmitted by the deployed node, the transmitting unit transmits the suspend response requests again to the deployed node, until the acknowledgement information fed back by the deployed node is received.

Statement 15. The apparatus according to statement 11, wherein when the collecting unit does not receive the link detection responses within the response await length, the transmitting unit again broadcasts the link detection request, and after the transmitting unit again broadcasts the link detection request, the starting unit restarts the back-off, modifies the response await length into a second predetermined period of time, and waits for the deployed nodes to respond link detection responses.

Statement 16. A portable terminal, including an auxiliary apparatus for wireless network deployment, the auxiliary apparatus for wireless network deployment being configured to:

broadcast a link detection request;
collect link detection responses received within a predetermined time;
determine a target reference node and non-target reference nodes of the apparatus taking nodes transmitting the link detection responses as reference nodes;
determine a link connection status of the apparatus relative to each reference node according to the link detection responses;
and determine a movement direction and distance of the apparatus according to the link connection status of the apparatus relative to each reference node.

Statement 17. A method for wireless network deployment, applied to an auxiliary apparatus for wireless network deployment, including:

broadcasting a link detection request;
collecting link detection responses received within a predetermined time;
determining a target reference node and non-target reference nodes of the apparatus taking nodes transmitting the link detection responses as reference nodes;
determining a link connection status of the apparatus relative to each reference node according to the link detection responses; and

determining a movement direction and distance of the apparatus according to the link connection status of the apparatus relative to each reference node.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. An auxiliary apparatus for wireless network deployment, comprising:

   a transmitting unit configured to broadcast a link detection request;
   a collecting unit configured to collect link detection responses received within a predetermined time;
   a first determining unit configured to, taking nodes transmitting the link detection response as reference nodes, determine a target reference node and non-target reference nodes of the apparatus;
   a second determining unit configured to determine a link connection status of the apparatus relative to each reference node according to the link detection responses; and
   a third determining unit configured to determine a movement direction and distance of the apparatus according to the link connection status of the apparatus relative to each reference node.

2. The apparatus according to claim 1, wherein when only one reference node transmits the link detection responses, the first determining unit determines that the reference node is the target reference node of the apparatus, and when multiple reference nodes transmit the link detection responses, the first determining unit determines that a reference node of lowest payload in the multiple reference nodes is the target reference node of the apparatus, and other reference nodes in the multiple reference nodes are non-target reference nodes of the apparatus.

3. The apparatus according to claim 1 or 2, wherein the second determining unit comprises:

   a first calculating module configured to calculate average receiving signal strength (RSS) and a packet delivery rate (PDR) of the link detection responses transmitted by each reference node; and
   a first determining module configured to determine the link connection status of the apparatus relative to each reference node according to the average RSS and the PDR.

4. The apparatus according to claim 3, wherein,
   when the average RSS is greater than or equal to a minimum RSS that is required to reach a first status and the PDR is greater than or equal to a minimum PDR that is required to reach the first status, the first determining module determines that a connection status of a link between the apparatus and the reference node is the first status;
   when the average RSS is greater than or equal to a minimum RSS that is required to reach a second status and is less than the minimum RSS that is required to reach the first status and the PDR is greater than or equal to a minimum PDR that is required to reach the second status, the first determining module determines that the connection status of the link between the apparatus and the reference node is the second status;
   when the average RSS is greater than or equal to a minimum RSS that is required to reach a third status and is less than the minimum RSS that is required to reach the second status and the PDR is greater than or equal to a minimum PDR that is required to reach the third status, the first determining module determines that the connection status of the link between the apparatus and the reference node is the third status;
   and when the average RSS is less than the minimum RSS that is required to reach the third status and the PDR is less than the minimum PDR that is required to reach the third status, the first determining module determines that the connection status of the link between the apparatus and the reference node is a fourth status.

5. The apparatus according to any of the preceding claims, wherein the third determining unit comprises:

   a first judging module configured to, when only the target reference node transmits the link detection responses, judge whether a link connection status of the apparatus relative to the target reference node is the second status;

a second calculating module configured to, when it is judged yes by the first judging module, calculate a current distance of the apparatus relative to the target reference node, and determine that both a movement direction and a movement distance of the apparatus relative to the target reference node are 0; and when it is judged no by the first judging module, determine the current distance, the movement direction and the movement distance of the apparatus relative to the target reference node according to the link connection status of the apparatus relative to the target reference node.

6. The apparatus according to claim 5, wherein the second calculating module calculates the current distance of the apparatus relative to the target reference node according to the formula below:

$$d_{current} = \left( \frac{P_t \times G_t \times G_r \times h_t^2 \times h_r^2}{P_{current} \times L} \right)^{1/4} ;$$

where, $P_t$ is transmitting power, $G_t$ is a gain of a transmitting antenna, $G_r$ is a gain of a receiving antenna, ht is the height of the transmitting antenna, $h_r$ is the height of the receiving antenna, L is a system loss factor, and $P_{current}$ is receiving signal strength RSS of a current position;

wherein, if the link connection status of the apparatus relative to the target reference node is the third status or the fourth status, the second calculating module calculates the movement distance of the apparatus relative to the target reference node according to a formula $d_{move\ to\ stable} = d_{current} - d_{stable}$, and determines that the movement direction is a direction close to the target reference node;

and wherein, if the link connection status of the apparatus relative to the target reference node is the first status, the second calculating module calculates the movement distance of the apparatus relative to the target reference node according to a formula $d_{depart\ ultra\text{-}stable} = d_{ultra} - d_{current}$, and determines that the movement direction is a direction away from the target reference node;

where, $d_{current}$ is the current distance of the apparatus relative to the target reference node, $d_{stable}$ is a maximum theoretical distance of node deployment satisfying the second status, and $d_{ultra}$ is a maximum theoretical distance of node deployment satisfying the first status.

7. The apparatus according to any of the preceding claims, wherein the third determining unit comprises:

a second judging module configured to, when a non-target reference node, besides the target reference node, transmits the link detection responses, judge whether a link connection status of the apparatus relative to the target reference node is a second status, and whether a link connection status of the apparatus relative to the non-target reference node is a fourth status;

a third calculating module configured to, when it is judged yes by the second judging module, calculate current distances of the apparatus relative to the target reference node and the non-target reference node, and determine that both a movement direction and a movement distance of the apparatus relative to the target reference node and the non-target reference node are 0; and when it is judged no by the second judging module, determine the current distance, the movement direction and the movement distance of the apparatus relative to the target reference node and the non-target reference node according to the link connection status of the apparatus relative to the target reference node and the non-target reference node.

8. The apparatus according to claim 7, wherein the third calculating module calculates the current distances of the apparatus relative to the target reference node and the non-target reference node according to the formula below:

$$d_{current} = \left( \frac{P_t \times G_t \times G_r \times h_t^2 \times h_r^2}{P_{current} \times L} \right)^{1/4} ;$$

where, $P_t$ is transmitting power, $G_t$ is a gain of a transmitting antenna, $G_r$ is a gain of a receiving antenna, $h_t$ is the height of the transmitting antenna, $h_r$ is the height of the receiving antenna, L is a system loss factor, and $P_{current}$ is receiving signal strength RSS of a current position;

wherein, if the link connection status of the apparatus relative to the target reference node is the second status, the third calculating module determines that both the movement direction and the movement distance of the apparatus relative to the target reference node are 0;

wherein, if the link connection status of the apparatus relative to the target reference node is a third status or the fourth status, the third calculating module calculates the movement distance of the apparatus relative to the target reference node according to a formula $d_{move\ to\ stable} = d_{current} - d_{stable}$, and determines that the movement direction is a direction close to the target reference node;

wherein, if the link connection status of the apparatus relative to the target reference node is a first status, the third calculating module calculates the movement distance of the apparatus relative to the target reference node according to a formula $d_{depart\ ultra\text{-}stable} = d_{ultra} - d_{current}$, and determines that the movement direction is a direction away from the target reference node;

where, $d_{current}$ is the current distance of the apparatus relative to the target reference node, $d_{stable}$ is a maximum theoretical distance of node deployment satisfying the second status, and $d_{ultra}$ is a maximum theoretical distance of node deployment satisfying the first status;

wherein, if the link connection status of the apparatus relative to the non-target reference node is the first status or the second status or the third status, the third calculating module calculates the movement distance of the apparatus relative to the non-target reference node according to a formula $d_{depart\ connection} = d_{connect} - d_{current}$, and determines that the movement direction is a direction away from the target reference node; where, $d_{current}$ is the current distance of the apparatus relative to the non-target reference node, $d_{connect}$ is a maximum theoretical distance of node deployment satisfying the third status;

and wherein, if the link connection status of the apparatus relative to the non-target reference node is the fourth status, the third calculating module determines that both the movement direction and the movement distance of the apparatus relative to the non-target reference node are 0.

9. The apparatus according to any of the preceding claims, wherein the apparatus further includes:

   an updating unit configured to update a link status table according to the link connection status of the apparatus relative to each reference node.

10. The apparatus according to any of the preceding claims, wherein the apparatus further includes:

    a prompting unit configured to prompt the link status table updated by the updating unit.

11. The apparatus according to any of the preceding claims, wherein the apparatus further includes:

    a starting unit configured to start back-off after the transmitting unit broadcasts the link detection request, so as to wait for the link detection responses transmitted by the deployed nodes, set a response await length to be a first predetermined period of time, so that the collecting unit collects the link detection responses received within the first predetermined period of time.

12. The apparatus according to claim 11, wherein the apparatus further includes:

    a judging unit configured to judge whether the response await length exceeds a predetermined maximum await length, terminate the processing if it is judged yes, and notify the collecting unit to perform subsequent processing if it is judged no.

13. The apparatus according to claim 11, wherein after the collecting unit collects the link detection response within the response await length, the transmitting unit further transmits a suspend response request to a deployed node feeding back the link detection response, notifying the deployed node to suspend feeding back the link detection response.

14. The apparatus according to claim 13, wherein when the collecting unit does not receive acknowledgement information fed back by the deployed node but still receives the link detection response transmitted by the deployed node, the transmitting unit transmits the suspend response requests again to the deployed node, until the acknowledgement information fed back by the deployed node is received.

15. The apparatus according to claim 11, wherein when the collecting unit does not receive the link detection responses within the response await length, the transmitting unit again broadcasts the link detection request, and after the transmitting unit again broadcasts the link detection request, the starting unit restarts the back-off, modifies the response await length into a second predetermined period of time, and waits for the deployed nodes to respond link detection responses.

16. A portable terminal, comprising an auxiliary apparatus for wireless network deployment, the auxiliary apparatus for wireless network deployment being configured to:

broadcast a link detection request;
collect link detection responses received within a predetermined time;
determine a target reference node and non-target reference nodes of the apparatus taking nodes transmitting the link detection responses as reference nodes;
determine a link connection status of the apparatus relative to each reference node according to the link detection responses;
and determine a movement direction and distance of the apparatus according to the link connection status of the apparatus relative to each reference node.

17. A method for wireless network deployment, applied to an auxiliary apparatus for wireless network deployment, comprising:

broadcasting a link detection request;
collecting link detection responses received within a predetermined time;
determining a target reference node and non-target reference nodes of the apparatus taking nodes transmitting the link detection responses as reference nodes;
determining a link connection status of the apparatus relative to each reference node according to the link detection responses; and
determining a movement direction and distance of the apparatus according to the link connection status of the apparatus relative to each reference node.

100

auxiliary apparatus 109

| prompting unit | transmitting unit | starting unit |

101

106

102

| collecting unit | judging unit |

107

| first determining unit | second determining unit |

103

104

| updating unit | third determining unit |

108

105

## Fig. 1

200

201

?

link detection request

link detection response

202

√

## Fig. 2

√

? back-off mechanism is started
response await length is set to
be k seconds

link detection request

link detection response

received response

.
.
.

link detection response

Back-off terminates

suspend response request

ACK

# Fig. 3

√

?

back-off mechanism is started
response await length is set to be k seconds

link detection request

Back-off terminates, and any response
packets are not received

link detection request

the auxiliary apparatus re-broadcast s the
link detection request packet and re-start
the clock back-off mechanism, extend the
response await length to 2k seconds

link detection response

...

link detection response

Back-off terminates

suspend response request

ACK

# Fig. 4

link detection request

link detection response

link detection response

suspend response request

link detection response

suspend response request

ACK

back-off mechanism is started
response await length is set to
be k seconds

received response

Back-off terminates

**Fig. 5**

Multiple
connection
region

Stable connection
region

Equivalent deployment
region

Fragile connection
region

A    ?    B

A    ?    B
Move    V

**Fig. 6**

Multiple connection
region

Stable connection region

Equivalent deployment region

Fragile connection region

A    B    ?

A    B    ?    V    Move

## Fig. 7

Multiple connection
region

Stable connection region

Equivalent deployment region

Fragile connection region

A    ?    B

A    ?    B    Move    V

## Fig. 8

104

| second determining unit |
| --- |

901

| first calculating module |
| --- |

902

| first determining module |
| --- |

**Fig. 9**

200

1001

?

N

1002

1003

1004

**Fig. 10**

| Link status | | Link status | | Link status | | Link status |
| --- | --- | --- | --- | --- | --- | --- |
| Ultra stable | | Ultra stable | | Ultra stable | | Ultra stable con. |
| Stable | | Stable | | Stable | | Stable |
| Fragile | | Fragile | | Fragile | | Fragile |
| disconnection | | disconnection | | disconnection | | disconnection |

Move to ultra stable       Move to stable       Move to connectivity

Deployed node

√   Ultra stable       stable       fragile       disconnect

Move to stable       Move to unstable       Move to disconnect

$P_{ultra}, R_{ultra}$

Equivalent Deployment region

$P_{stable}, R_{stable}$

Stable connection region

$P_{connect}, R_{connect}$

Connection region       Disconnection region

Maximum ultra stable distance: $d_{ultra}$

Fragile connection region

Maximum stable distance: $d_{stable}$

Maximum connectible distance: $d_{connect}$

# Fig. 11

105

third determining unit
1201

first judging module

1202

second calculating module

# Fig. 12

105

third determining unit

1301

second judging module

1302

third calculating module

**Fig. 13**

1400

Portable terminal          100

Auxiliary apparatus for wireless network deployment

**Fig. 14**

1500

portable terminal

1501          1503

1504    input unit

communications module (transmitter/receiver)

memory

buffer

application/function

1502

data

driver

central processing unit

audio processing unit

1505

display          1506

power supply    1507

**Fig. 15**

1601

a link detection request is broadcasted

1602

link detection responses received within a predetermined time are collected

1603

a target reference node and non-target reference nodes of the apparatus are determined taking nodes transmitting the link detection responses as reference nodes

1604

a link connection status of the apparatus relative to each reference node is determined according to the link detection responses

1605

a movement direction and distance of the apparatus are determined according to the link connection status of the apparatus relative to each reference node

**Fig. 16**

start

NO

1701
current reference node is target?

YES

1702
Link connection status is stable?
NO →
1704
Link connection status is ultra stable?
NO →
1706
Link connection status is fragile?
NO →
1708
Link connection status is disconnection

YES 1703
Movement direction is 0
Movement distance is 0

YES 1705
Movement direction is -1
Movement distance is $d_{depart\ ultra\ stable}$

YES 1707
Movement direction is 1
Movement distance is $d_{move\ to\ stable}$

1709
Movement direction is 1
Movement distance is $d_{move\ to\ stable}$

end

1710
Link connection status is stable?
NO →
1712
Link connection status is ultra stable?
NO →
1714
Link connection status is fragile?
NO →
1716
Link connection status is disconnection

YES 1711
Movement direction is -1
Movement distance is $d_{depart\ connection}$

YES 1713
Movement direction is -1
Movement distance is $d_{depart\ connection}$

YES 1715
Movement direction is -1
Movement distance is $d_{depart\ connection}$

1717
Movement direction is 0
Movement distance is $d_{move\ to\ stable}=0$

end

**Fig. 17**

an identity of the deployment apparatus is set to be a relay node or a sensor node — 1801

a link detection request is broadcasted — 1802

the starting times of the back-off is greater than N? — 1803 — YES

NO

a back-off mechanism is started — 1804

a link detection response is received — 1805

the back-off is suspended? — 1806 — NO

YES

the link detection response is received? — 1807

the back-off is restarted, and a response await length is extended to be N×k seconds — 1820

a suspend response request is transmitted in a unicast manner — 1808

ACK is received? — 1809 — NO

the suspend response request is retransmitted — 1821

YES

a link detection response is received from a deployed node? — 1810 — NO

numbers of child nodes of source nodes feeding back the link detection responses are compared — 1822

YES

a current deployed node is a target reference node — 1811

a source node having the minimum number of child nodes is the target reference node, and other source nodes are reference nodes — 1823

average RSS and a PDR are calculated — 1812

a connection status of a link between the auxiliary apparatus and the target reference node is determined — 1813

the current distances between the auxiliary apparatus and the reference nodes are calculated — 1824 — NO

the auxiliary apparatus and the target reference node are in the stable connection status — 1814

YES

a current distance between the auxiliary apparatus and the target reference node is calculated — 1815

the movement direction is determined — 1825

the movement direction is set to be 0 — 1816

the movement distance is set to be 0 — 1817

the movement distance is calculated — 1826

information in a link status table is updated, and information on the link connection status between the auxiliary apparatus and the target reference node is indicated — 1818

the auxiliary apparatus is moved to a new position — 1819

# Fig. 18

Europäisches
Patentamt

European
Patent Office

Office européen
des brevets

**EUROPEAN SEARCH REPORT**

Application Number

EP 17 15 8777

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 895 319 A1 (BOSCH GMBH ROBERT [DE]) 5 March 2008 (2008-03-05) <br> * paragraph [0002] * <br> * paragraph [0008] - paragraph [0026] * <br> * paragraph [0035] - paragraph [0045] * <br> * paragraph [0046] - paragraph [0050] * <br> * paragraph [0051] - paragraph [0056] * <br> * paragraph [0057] - paragraph [0060] * <br> * paragraph [0065] * <br> * figures 1-5 * | 1-17 | INV. <br> H04W16/18 <br> H04W24/02 |
| X | US 8 005 108 B1 (BROAD ALAN S [US] ET AL) 23 August 2011 (2011-08-23) <br> * the whole document * | 1-17 | |
| X | US 2015/215791 A1 (GELLER STEVEN I [US] ET AL) 30 July 2015 (2015-07-30) <br> * paragraph [0006] - paragraph [0018] * <br> * paragraph [0039] - paragraph [0053] * <br> * paragraph [0068] - paragraph [0086] * <br> * paragraph [0090] - paragraph [0093] * <br> * paragraph [0096] - paragraph [0116] * <br> * paragraph [0117] - paragraph [0121] * <br> * paragraph [0129] - paragraph [0137] * | 1-17 | |
| X | EP 2 704 475 A1 (ALCATEL LUCENT [FR]) 5 March 2014 (2014-03-05) <br> * paragraph [0008] - paragraph [0014] * <br> * paragraph [0027] - paragraph [0031] * <br> * sentence 37, paragraph 33 * <br> * figures 1-3 * | 1-17 | TECHNICAL FIELDS SEARCHED (IPC) <br><br> H04W |

The present search report has been drawn up for all claims

| Place of search | Date of completion of the search | Examiner |
|---|---|---|
| The Hague | 18 August 2017 | Puiulet, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 8777

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2017

| Patent document cited in search report | | Publication date | Patent family member(s) | | Publication date |
|---|---|---|---|---|---|
| EP 1895319 | A1 | 05-03-2008 | EP | 1895319 A1 | 05-03-2008 |
| | | | US | 2008056162 A1 | 06-03-2008 |
| US 8005108 | B1 | 23-08-2011 | NONE | | |
| US 2015215791 | A1 | 30-07-2015 | US | 2015215791 A1 | 30-07-2015 |
| | | | US | 2017230813 A1 | 10-08-2017 |
| EP 2704475 | A1 | 05-03-2014 | NONE | | |

EPO FORM P0459

For more details about this annex : see Official Journal of the European Patent Office, No. 12/82